(19) Europäisches Patentamt
European Patent Office
Office européen des brevets

(11) EP 2 969 990 B1

(12) FASCICULE DE BREVET EUROPEEN

(45) Date de publication et mention
de la délivrance du brevet:
**01.02.2017 Bulletin 2017/05**

(21) Numéro de dépôt: **14705125.4**

(22) Date de dépôt: **14.02.2014**

(51) Int Cl.:
***C03C 17/36*** *(2006.01)*

(86) Numéro de dépôt international:
**PCT/EP2014/052943**

(87) Numéro de publication internationale:
**WO 2014/139755 (18.09.2014 Gazette 2014/38)**

(54) **VITRAGE COMPORTANT UNE COUCHE DE CONTRÔLE SOLAIRE**

FENSTER ENTHALTEND EINE SONNENSCHUTZBESCHICHTUNG

WINDOW COMPRISING A SOLAR CONTROL COATING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.03.2013 BE 201300168
27.06.2013 EP 13173992**

(43) Date de publication de la demande:
**20.01.2016 Bulletin 2016/03**

(73) Titulaire: **AGC Glass Europe
1348 Louvain-La-Neuve (BE)**

(72) Inventeurs:
• **MAHIEU, Stijn
B-9920 Lovendegem (BE)**
• **DUSOULIER, Laurent
B-4880 Aubel (BE)**

(74) Mandataire: **Larangé, Françoise
AGC Glass Europe
Technovation Centre
IP Department
Rue Louis Blériot, 12
6041 Gosselies (BE)**

(56) Documents cités:
**US-A1- 2006 222 863      US-A1- 2012 225 304
US-A1- 2012 225 316      US-A1- 2012 225 317
US-A1- 2012 308 811      US-B2- 7 090 921
US-B2- 7 582 356**

• **KAMIL ZUBER ET AL: "Enhanced abrasion
resistance of ultrathin reflective coatings on
polymeric substrates: An improvement upon
glass substrates", WEAR, vol. 297, no. 1-2, 1
janvier 2013 (2013-01-01), pages 986-991,
XP055075519, ISSN: 0043-1648, DOI:
10.1016/j.wear.2012.11.050**

**Description**

**1. Domaine de l'invention.**

Le domaine de l'invention est celui des vitrages de contrôle solaire constitué d'un substrat verrier portant un empilage multicouches, dont au moins une couche mince confère les dites propriétés de contrôle solaire. A cette couche fonctionnelle sont associées des couches diélectriques qui ont pour rôle notamment de régler les propriétés de réflexion, de transmission, de teinte et de protection contre les altérations mécaniques ou chimiques des propriétés du vitrage.

Plus précisément, l'invention concerne les vitrages destinés à garnir les bâtiments mais également les véhicules automobiles. Selon ces utilisations certaines propriétés requises peuvent différer comme expliqué plus loin.

Les fonctionnalités des vitrages de contrôle solaire sont multiples. Elles concernent notamment la prévention de l'échauffement de l'intérieur de l'habitacle d'un véhicule automobile, en particulier vis-à-vis du rayonnement solaire traversant un toit transparent, ou d'un bâtiment exposé au rayonnement solaire lorsque celui-ci est suffisamment intense. Selon certaines formes de réalisation, cette prévention de l'échauffement peut être obtenue tout en maintenant une transmission lumineuse appropriée.

Les vitrages, notamment automobiles, doivent aussi participer à l'établissement de conditions de régulation de la température en période hivernale en évitant la déperdition énergétique vers l'extérieur de l'habitacle ou du bâtiment. Les vitrages doivent ainsi présenter des propriétés bas-émissives. Ils s'opposent à l'émission de radiations énergétiques depuis l'habitacle ou le bâtiment.

Dans le cas des vitrages pour bâtiments, il est de plus demandé qu'ils soient susceptibles de supporter des traitements thermiques sans que leur couleur notamment en réflexion soit modifiée de manière sensible. L'objectif est de pouvoir disposer côte à côte des vitrages traités thermiquement et d'autres ne l'ayant pas été, sans que des différences de couleur soient manifestes.

Dans la suite de la description, les propriétés optiques sont définies pour des vitrages dont le substrat est en verre "float" ordinaire clair de 4 mm d'épaisseur. Le choix du substrat influence bien évidemment ces propriétés. Pour le verre clair ordinaire la transmission lumineuse sous 4mm, en l'absence de couche, se situe approximativement à 90% et la réflexion à 8%, mesurée avec une source conforme à l'illuminant « lumière du jour » normalisé D65 par la CIE et sous un angle solide de 2°. Les mesures énergétiques, quant à elles, sont faites suivant la norme EN 410.

Par le terme « verre », on entend désigner un verre inorganique. On entend par là un verre d'épaisseur au moins supérieure ou égale à 0,5 mm et au plus inférieure ou égale 20,0 mm, préférentiellement au moins supérieure ou égale à 1.5 mm et au plus inférieure ou égale à 10,0 mm, comprenant du silicium comme l'un des constituants indispensables de la matière vitreuse. Pour certaines applications, l'épaisseur peut par exemple être de 1,5 ou 1,6 mm, ou de 2 ou 2,1 mm. Pour d'autres applications, elle sera par exemple aux environs de 4 ou de 6 mm. On préfère les verres silico-sodocalciques clairs, extra-clairs ou colorés dans la masse ou en surface.

La présence d'un empilage multicouches peut poser des problèmes de couleur. Le plus souvent le marché demande que les vitrages offrent, aussi bien en transmission qu'en réflexion, une coloration aussi neutre que possible et donc d'apparence grise. Des colorations légèrement vertes ou bleutées sont aussi possibles. Les empilages multicouches, et en particulier les natures, indices et épaisseurs des couches diélectriques encadrant les couches fonctionnelles, sont choisis notamment pour maîtriser ces colorations.

Les vitrages automobiles, en théorie peuvent être multiples pour leur conférer une meilleure propriété d'isolation notamment thermique. En fait ces réalisations sont exceptionnelles. L'immense majorité de ces vitrages est constituée de vitrages uniques, soit monolithiques soit feuilletés. Dans ces deux cas, pour que le caractère bas-émissif s'exprime convenablement, l'empilage multicouches est nécessairement sur une face qui n'est pas à l'abri de sollicitations mécaniques ou chimiques. Les empilages en question doivent donc présenter une très bonne résistance à ces possibles agressions.

En pratique pour limiter les risques d'altération, les empilages multicouches sont normalement sur la face du vitrage tournée vers l'habitacle. Mais même dans cette position ils doivent offrir une très bonne résistance mécanique.

Les systèmes de couches selon l'invention doivent encore se prêter aux mises en forme des vitrages. Ceux utilisés dans les véhicules sont notamment l'objet de traitements thermiques lors du formage, notamment du bombage des feuilles de verre, ou encore lors de la trempe destinée à leur conférer notamment des propriétés mécaniques renforcées. Les couches utilisées selon l'invention doivent supporter ces traitements sans que leurs propriétés soient dégradées. Des traitements de ce type imposent des températures qui dépassent 600°C pendant une dizaine de minutes. Soumis à ces températures les couches doivent conserver leurs qualités.

Dans les nombreuses applications requérant de disposer de vitrages à forte transmission lumineuse, le choix des couches fonctionnelles impose que celles-ci soient particulièrement transparentes. Le plus usuel est de sélectionner une ou plusieurs couches métalliques de très faible épaisseur : par exemple, une ou plusieurs couches d'argent disposées entre des couches diélectriques qui la (les) protègent et minimisent à la fois la réflexion et ajustent la neutralité. Les systèmes de couches obtenus dans l'ensemble ont pour limite une certaine fragilité notamment mécanique, même en présence de couches spécifiques de protection.

Pour les vitrages qui ne nécessitent pas une forte transmission lumineuse, et même éventuellement pour lesquels la transmission doit rester faible, le choix des systèmes de couches offre une diversité plus importante.

## 2. Solutions de l'art antérieur.

L'art antérieur propose des vitrages comportant des couches métalliques ou d'alliages métalliques absorbant le rayonnement solaire, de nitrures ou oxy-nitrures de divers métaux et notamment de NiCr, Mo, W, Ta, CoCr, Al, Nb, Zr. Pour permettre à ces couches métalliques de présenter une bonne résistance notamment mécanique, il est aussi proposé de disposer des couches diélectriques connues pour être relativement dures. Dans ce domaine les couches les plus usuelles sont celles de silice, $SiO_2$, et de nitrure de silicium, $Si_3N_4$.

Les propositions antérieures répondent en partie au moins aux exigences de l'utilisation envisagée des vitrages selon l'invention. Il reste néanmoins des nécessités d'amélioration notamment du point de vue de la résistance aux traitements thermiques.

Les documents US 2012/0225316, US 2012/0225316 et US 2012/0225304 divulguent des vitrages contrôle solaire avec une barrière à base de nickel-chrome pouvant incorporer du zirconium.

## 3. Objectifs de l'invention

L'invention a notamment pour objectif de pallier ces inconvénients de l'art antérieur.

Plus précisément, un objectif de l'invention, dans au moins un de ses modes de réalisation, est de fournir un vitrage muni d'un empilage multicouches qui est apte à subir un traitement thermique à température élevée, de type trempe et/ou bombage, de préférence sans modification significative de sa teinte, en particulier en réflexion côté substrat, de telle sorte qu'un vitrage non traité thermiquement puisse être juxtaposée avec sa version traitée thermiquement sans qu'un observateur puisse détecter une différence significative de l'aspect esthétique global.

L'invention, dans au moins un de ses modes de réalisation, a encore pour objectif de fournir un vitrage muni d'un empilage multicouches présentant une bonne stabilité du point de vue thermique, chimique et mécanique.

L'invention, dans au moins un de ses modes de réalisation, a aussi pour objectif de fournir un vitrage dont l'empilage multicouches puisse être placé en position externe sans devoir nécessairement être protégé de l'environnement externe par un autre substrat.

## 4. Exposé de l'invention.

L'invention se rapporte à un vitrage de contrôle solaire comportant sur au moins l'une des faces d'un substrat verrier un empilage multicouches comprenant au moins une couche absorbant le rayonnement solaire et des revêtements diélectriques encadrant ladite couche absorbant le rayonnement solaire, caractérisé en ce que la couche absorbant le rayonnement solaire est une couche d'un alliage métallique à base de zirconium et de chrome comprenant au minimum 25 % en poids de chrome et au minimum 20 % en poids de zirconium, l'empilage multicouches comprenant entre le substrat et la couche absorbant le rayonnement solaire, ainsi qu'au-dessus de la couche absorbant le rayonnement solaire, au moins un revêtement en matériau diélectrique à base d'un composé sélectionné parmi l'oxyde de silicium, l'oxyde d'aluminium, le nitrure de silicium, le nitrure d'aluminium, les nitrures mixtes d'aluminium-silicium, l'oxynitrure de silicium et l'oxynitrure d'aluminium.

Le principe général de l'invention repose sur la présence d'une couche métallique absorbant le rayonnement solaire qui est une couche d'un alliage métallique à base de zirconium et de chrome, ladite couche étant enchâssée entre au moins deux couches à base d'au moins un matériau diélectrique listé en revendication 1. Les inventeurs ont déterminé que de manière surprenante un tel empilage multicouches présente une bonne durabilité chimique, thermique et mécanique. En effet, la couche métallique absorbant le rayonnement solaire à base de chrome et de zirconium provoque une diminution de la transmission de l'énergie solaire, ladite couche conservant ses propriétés d'absorption plus particulièrement après un traitement thermique.

Par « couche d'un alliage métallique » pour la couche absorbant le rayonnement solaire, on entend une couche ayant un caractère essentiellement métallique. Toutefois, il n'est pas exclu que cette couche contienne éventuellement quelques traces d'azote ou d'oxygène. En effet, l'atmosphère lors du dépôt de cette couche métallique peut être constituée de gaz noble pur, par exemple 100% d'argon, ou l'atmosphère peut contenir un peu d'azote ou d'oxygène provenant des zones de dépôt voisines. Dans le cas où les couches diélectriques qui entourent la couche absorbante sont des nitrures de silicium, la cible métallique destinée à former la couche absorbante peut même être disposée dans la même chambre de dépôt, sans isolation franche avec les zones de dépôt des nitrures de silicium, car l'azote sera prioritairement attiré par le silicium. Dans ce cas, l'atmosphère environnant peut contenir un pourcentage relativement élevé d'azote, et donc, même si l'azote s'associera prioritairement avec le silicium, la couche métallique absorbante pourra contenir un peu d'azote, sans pour autant perdre son caractère métallique. Dans le cas où les couches diélectriques qui entourent la couche absorbante sont des oxydes ou oxynitrures, il peut y avoir également un peu d'oxygène provenant des zones de dépôt voisines dans l'atmosphère de dépôt.

De préférence, la couche comprend au moins 35%, et avantageusement au moins 40% et même au moins 45% en poids de zirconium. De préférence, la couche comprend entre 20 et 75% en poids de zirconium, avantageusement entre 25 et 75% ou entre 30 et 75% en poids de zirconium, et favorablement entre 45 et 65% en poids de zirconium.

Par « couche à base d'un matériau diélectrique », on entend également des couches dopées avec au moins un autre élément, contenant jusqu'à environ maximum 10% poids de cet autre élément, ces dernières présentant des propriétés diélectriques ne différant en pratique pas des couches consistant en ledit matériau diélectrique. Ainsi par exemple, lorsque la couche est en nitrure ou oxyde de silicium celle-ci peut contenir jusqu'à 10% en poids d'aluminium (par exemple, des couches déposées par procédé de pulvérisation cathodique à partir d'une cible de silicium contenant jusqu'à 10% poids d'aluminium). Les couches diélectriques selon l'invention peuvent en outre être constituée de plusieurs couches individuelles comprenant ou consistant essentiellement en ces mêmes matériaux. Les couches diélectriques peuvent aussi être déposées par la technique bien connue appelée PECVD (« Plasma-Enhanced Chemical Vapor Deposition ») ou dépôt chimique en phase vapeur assisté par plasma.

Ainsi, l'invention repose sur une approche tout à fait nouvelle et inventive basée sur la sélection d'une couche métallique absorbant le rayonnement solaire qui est à base d'un alliage de chrome et de zirconium.

Avantageusement, le vitrage selon l'invention est tel que la couche métallique absorbant le rayonnement solaire à base de chrome et de zirconium comprend également un métal supplémentaire sélectionné parmi Ti, Nb, Ta, Ni, Sn et W.

De préférence, la couche absorbant le rayonnement solaire a une épaisseur géométrique comprise entre 0,5 et 30 nm, avantageusement comprise entre 1 et 30 nm, de préférence comprise entre 2 et 25 nm.

La couche métallique à base de chrome et de zirconium présentant de telles épaisseurs possède des propriétés d'absorption de l'infrarouge tout particulièrement requises pour son utilisation au sein de l'empilage multicouches pour vitrage automobile ou de bâtiment ou comme élément vitré d'un appareil électroménager, telle une porte de four de cuisson.

Selon une forme de réalisation de l'invention, la couche absorbant le rayonnement solaire a de préférence une épaisseur géométrique comprise entre 10 et 25 nm, et avantageusement comprise entre 12 et 22 nm. Cette forme de réalisation de l'invention est tout particulièrement appropriée lorsque la couche absorbant le rayonnement solaire forme la ou au moins une couche fonctionnelle de l'empilage multicouches, c'est-à-dire qu'elle constitue la ou une des couches fondamentales pour l'obtention des propriétés de contrôle solaire.

Selon une autre forme de réalisation de l'invention, la couche absorbant le rayonnement solaire a de préférence une épaisseur géométrique comprise entre 0,5 et 30 nm, avantageusement comprise entre 1 et 10 nm, et préférentiellement comprise entre 2 et 5 nm. Cette autre forme de réalisation de l'invention est tout particulièrement appropriée lorsque la couche absorbant le rayonnement solaire est une couche complémentaire de la couche fonctionnelle de l'empilage multicouches, destinée à améliorer les propriétés de contrôle solaire déjà obtenues avec la ou des couches fonctionnelles.

Selon un mode de réalisation avantageux, le vitrage selon l'invention est tel que la couche en matériau diélectrique entre le substrat et la couche absorbant le rayonnement solaire a une épaisseur optique d'au moins 10 nm et d'au plus 200 nm, préférentiellement d'au moins 20 nm et d'au plus 180 nm.

L'épaisseur optique d'une couche de matériau diélectrique est obtenue en multipliant l'épaisseur géométrique (physique) de la couche considérée par l'indice de réfraction du matériau la constituant.

Selon un mode préféré de réalisation, le vitrage selon l'invention est tel que la couche en matériau diélectrique située au-dessus de la couche absorbant le rayonnement solaire a une épaisseur optique d'au moins 15 nm et d'au plus 200 nm.

Selon un premier mode de réalisation préféré, la couche métallique absorbant le rayonnement solaire est la couche fonctionnelle de base de l'empilage multicouches. L'avantage de cet empilage multicouches est d'être extrêmement simple et très résistant.

De préférence, l'empilage multicouches comprend au moins deux couches absorbant le rayonnement solaire. Cette caractéristique permet d'adapter plus facilement les propriétés optiques et thermiques de l'empilage multicouches aux desiderata. Avantageusement, ces deux couches absorbant le rayonnement solaire sont séparées par une couche diélectrique, par exemple en nitrure de silicium. Une structure particulièrement appropriée est la suivante :

substrat/Si3N4/CrZr/Si3N4/CrZr/Si3N4.

Selon un second mode de réalisation préféré, le vitrage selon l'invention est tel que l'empilage multicouches comprend au moins une couche métallique supplémentaire à base d'argent de telle sorte que la ou chaque couche à base d'argent soit entourée d'un revêtement diélectrique. Ce revêtement diélectrique peut être formé d'un matériau tel que décrit ci-dessus en relation avec les autres formes de réalisation de l'invention. Il peut s'agir aussi de tout matériau diélectrique bien connu dans le domaine, tel que par exemple du stannate de zinc ou du ZnO, dopé ou non.

Dans ce second mode de réalisation, la couche fonctionnelle de base de l'empilage multicouches est la couche à base d'argent qui réfléchit le rayonnement infrarouge, ce qui permet une meilleure efficacité du contrôle solaire tout en conservant une transmission lumineuse plus élevée et donc un gain significatif en sélectivité. L'ajout d'une couche supplémentaire à base d'argent est surprenant car ce type de couche résiste généralement mal au traitement thermique à haute température, et de plus fragilise l'ensemble de l'empilage multicouches du point de vue mécanique et chimique. En général, la présence d'une couche à l'argent empêche le positionnement de l'empilage multicouches en contact avec l'environnement externe et requiert la protection de l'empilage multicouches à l'aide d'un substrat supplémentaire. Les inventeurs ont découvert que, de manière surprenante, l'invention permet de pallier ces inconvénients.

La combinaison d'une couche à base d'argent avec la couche absorbant le rayonnement solaire permet d'une part d'obtenir simultanément des propriétés de réflexion du rayonnement infrarouge, procurées par la couche à base d'argent, alliée à des propriétés d'absorption du rayonnement énergétique solaire.

Selon une première forme préférée de ce second mode de réalisation, au moins un des revêtements diélectriques comprend au moins deux couches diélectriques et la couche métallique absorbant le rayonnement solaire est insérée entre ces deux couches diélectriques de ce revêtement diélectrique. Les inventeurs ont constaté que cette configuration séparait efficacement la fonction de réflexion de l'infrarouge de la fonction d'absorption du rayonnement solaire, ce qui permet plus facilement d'optimiser les deux fonctions, en particulier lorsqu'on désire améliorer la qualité cristallographique de l'argent pour obtenir une émissivité plus faible, par exemple à l'aide d'une couche à base de ZnO sous l'argent, souvent appelée couche de mouillage, et/ou au-dessus de l'argent, sans perte de fonction d'absorption de la couche métallique absorbant le rayonnement solaire. De plus, cette disposition permet de mieux protéger la couche métallique absorbant le rayonnement solaire pendant le traitement thermique afin qu'elle conserve autant que possible intégralement sa fonction d'absorption.

De préférence, la première couche diélectrique, du premier revêtement diélectrique, déposée sur le substrat verrier, et en contact avec lui, est une couche d'oxyde mixte zinc-étain, avantageusement contenant au moins 20% d'étain, plus préférentiellement encore une couche d'oxyde mixte zinc-étain dans laquelle la proportion zinc-étain est proche du 50-50 % poids ($Zn_2SnO_4$). Cette disposition est avantageuse pour la résistance au traitement thermique à haute température. L'oxyde mixte zinc-étain forme une barrière excellente aux ions alcalins migrant du substrat verrier à la température élevée du traitement thermique, de trempe notamment. Il présente et conserve aussi une bonne adhésion vis-à-vis du substrat verrier. Il présente en outre un bon taux de dépôt, comparé, par exemple, au $SiO_2$ ou à l'$Al_2O_3$ et il présente une bonne durabilité, comparé, par exemple, au ZnO pur ou à l'oxyde de bismuth. Il peut, en outre, être avantageux en ce qu'il a moins tendance à générer un voile après traitement thermique de l'empilage, comparé, par exemple, aux oxydes de Ti ou Zr. La couche constituée d'un oxyde, en contact direct avec le substrat, présente de façon avantageuse une épaisseur d'au moins 5 nm, de préférence d'au moins 8 nm, plus préférentiellement d'au moins 10 nm. Ces valeurs d'épaisseurs minimales permettent, entre autre, d'assurer la durabilité chimique du produit non traité thermiquement, mais aussi d'assurer la résistance au traitement thermique.

De préférence, les deux dites couches diélectriques enserrant la couche métallique absorbant le rayonnement solaire à base de chrome et de zirconium sont à base de nitrure de silicium ou de nitrure d'aluminium. Ceci assure une très bonne protection de la couche métallique absorbant le rayonnement solaire pendant le traitement thermique à température élevée.

Des exemples préférés, mais nullement limitatifs, de cette forme de réalisation peuvent être schématiquement représentés comme suit :

$G/Si_3N_4/CrZr/Si_3N_4/D/ZnO/Ag/AZO/Si_3N_4/ZnO/Ag/AZO/Si_3N_4/CrZr/Si_3N_4$
$G/D/ZnO/Ag/AZO/D/ZnO/Ag/AZO/D/Si_3N_4/CrZr/Si_3N_4$ ;
$G/Si_3N_4/CrZr/Si_3N_4/D/ZnO/Ag/AZO/D/ZnO/Ag/AZO/D/Si_3N_4[/TOP]$ ;
$G/Si_3N_4/CrZr/Si_3N_4/D/ZnO/Ag/B/D/ZnO/Ag/B/D/TOP$
$G/Si_3N_4/CrZr/Si_3N_4/D/ZnO/Ag/AZO/D/Si_3N_4/D/ZnO/Ag/AZO/D/Si_3N_4[/TOP]$ ;
$G/D/ZnO/Ag/AZO/D/Si_3N_4/CrZr/Si_3N_4/D/ZnO/Ag/AZO/D/Si_3N_4[/TOP]$;
$G/D/ZnO/Ag/B/D/Si_3N_4/CrZr/Si_3N_4/D/ZnO/Ag/B/D/Si_3N_4[/TOP]$ ;

G représentant le substrat, de préférence une feuille de verre sodo-calcique ordinaire ; B représentant une couche barrière contre l'oxydation de l'argent bien connue dans le domaine ; AZO représentant une couche barrière à base d'oxyde de zinc, éventuellement dopé à l'aluminium, déposée à partir d'une cible (cathode) céramique d'oxyde de zinc (dopé éventuellement à l'aluminium) pulvérisée en atmosphère à base d'argon avec peu ou pas d'oxygène ; D représentant une ou plusieurs couches diélectriques, notamment à base de stannate de zinc, de ZnO dopé ou non, ou d'un autre matériau connu dans le domaine et adapté à ce type d'empilage de couche, par exemple $TiO_2$, $ZrO_2$ ou leur mélange, ou un nitrure tel qu'AlN. Le terme « TOP » représente une couche supérieure de protection contenant du Ti et/ou du Zr, sous forme métallique, oxydée ou nitrurée. L'expression « [/TOP] » signifie que cette couche supérieure de protection est optionnelle. En variante, AZO peut être remplacé par d'autres barrières bien connues dans le domaine et adaptées aux propriétés désirées pour le système de couche formé, comme par exemple un oxyde de Ti, dopé ou non avec du niobium ou du zirconium, obtenu de préférence à partir d'une cible céramique formée de l'oxyde à déposer, ou ZnO pur. Les exemples donnés ci-dessus utilisent CrZr comme couche absorbant le rayonnement solaire à titre d'exemples concrets, mais CrZr peut également être remplacé par un autre matériau à base de zirconium et de chrome, tel que CrZrNb, CrZrW, CrZrNi, ..., sous forme métallique pure ou avec des traces d'azote ou d'oxygène.

De préférence, selon cette première forme du second mode de réalisation de l'invention, le système de couches comprend, au moins une fois, la succession des couches suivantes : « nitrure de silicium ou d'aluminium ou leur mélange / couche absorbant le rayonnement solaire / nitrure de silicium ou d'aluminium ou leur mélange / oxyde transparent intercalaire / couche de mouillage à base d'oxyde de zinc / couche métallique supplémentaire à base d'argent ». On a trouvé que l'utilisation d'une couche de mouillage à base de ZnO avec l'insertion d'une couche oxyde transparent intercalaire entre la couche de nitrure protégeant la couche absorbant le rayonnement solaire et la couche de mouillage permet de réduire fortement, ou d'éviter, la formation de taches inadmissibles dans l'aspect visuel du substrat revêtu ayant subi un traitement thermique à température élevée, qui ont tendance à se former lors du traitement thermique en l'absence de cette succession spécifique de couches. On a constaté également que sans cette couche d'oxyde transparent intercalaire, la résistance électrique superficielle, et donc également l'émissivité, avait tendance à augmenter de manière indésirable suite au traitement thermique, alors que grâce à la présence de cette couche d'oxyde intercalaire l'émissivité était au moins conservée, voire réduite de manière bénéfique, à la suite du traitement thermique. La couche d'oxyde transparent intercalaire peut être un oxyde à base de ZnO, $SnO_2$, $TiO_2$, $ZrO_2$ ou leur mélange, tout en étant différente de la couche de mouillage. De préférence, la couche d'oxyde transparent intercalaire est un oxyde mixte zinc-étain contenant au moins 20% d'étain et au moins 10% de zinc.

Selon une deuxième forme préférée de ce second mode de réalisation, la couche métallique supplémentaire à base d'argent est située dans l'empilement directement sur et/ou sous la couche métallique absorbant le rayonnement solaire.

Les inventeurs ont déterminé que de manière surprenante la présence de la couche absorbant le rayonnement solaire permet de réduire les risques de détérioration chimique de la couche à base d'argent lorsque ladite couche à base d'argent est en contact direct avec la couche absorbant le rayonnement solaire.

De préférence, selon cette deuxième forme du second réalisation, le vitrage selon l'invention est tel que la ou les couches métalliques à base d'argent, s'il y en a plusieurs, a ou ont une épaisseur d'au moins 9 nm, préférentiellement d'au moins 13 nm, et d'au plus 23 nm, plus préférentiellement d'au moins 15 nm et d'au plus 22 nm.

Selon ce mode de réalisation, la couche métallique absorbant le rayonnement solaire a de préférence une épaisseur géométrique comprise entre 0,5 et 8 nm, et avantageusement entre 0,5 et 5 nm.

Selon ce mode de réalisation, cette couche absorbant le rayonnement solaire peut être placée soit sous la couche supplémentaire à base d'argent, soit au-dessus de la couche à base d'argent. De préférence, elle est disposée de part et d'autre de la couche métallique supplémentaire à base d'argent, chaque couche ayant de préférence une épaisseur comprise dans la gamme indiquée ci-dessus, soit de préférence entre 0,5 et 5 nm. On a trouvé que c'est la meilleure disposition pour répartir l'absorption du rayonnement solaire de part et d'autre de la couche réfléchissant l'infrarouge.

Selon une première mise en oeuvre préférée du premier mode de réalisation le vitrage selon l'invention est tel qu'il comporte sur au moins l'une des faces d'un substrat verrier un empilage multicouches comprenant au moins successivement :

- Une couche en un matériau diélectrique à base d'au moins un composé chimique sélectionné parmi le groupe consistant en l'oxyde de silicium, l'oxyde d'aluminium, le nitrure de silicium, le nitrure d'aluminium, les nitrures mixtes d'aluminium-silicium, l'oxynitrure de silicium et l'oxynitrure d'aluminium, préférentiellement parmi le nitrure de silicum, le nitrure d'aluminium et les nitrures mixtes d'aluminium-silicium, la couche en matériau diélectrique ayant une épaisseur optique d'au moins 10 nm et d'au plus 200 nm, préférentiellement d'au moins 20 nm et d'au plus 180 nm ;
- Une couche métallique absorbant le rayonnement solaire comprenant de 20 à 75%, de préférence de 45 à 65% en poids de zirconium et au moins 25%, de préférence au moins 35% en poids de chrome, et ayant une épaisseur géométrique d'au moins 1 nm, préférentiellement d'au moins 3 nm, et d'au plus 30 nm, préférentiellement d'au moins 3 nm et d'au plus 25 nm ;
- Une couche en un matériau diélectrique à base d'au moins un composé chimique sélectionné parmi le groupe consistant en parmi l'oxyde de silicium, l'oxyde d'aluminium, le nitrure de silicium, le nitrure d'aluminium, les nitrures mixtes d'aluminium-silicium, l'oxynitrure de silicium et l'oxynitrure d'aluminium, préférentiellement parmi le nitrure de silicum, le nitrure d'aluminium, les nitrures mixtes d'aluminium-silicium, la couche en matériau diélectrique ayant une épaisseur optique d'au moins 15 nm et d'au plus 200 nm.

Selon une seconde mise en oeuvre préférée du premier mode de réalisation, le vitrage selon l'invention est tel qu'il comporte sur au moins l'une des faces d'un substrat verrier un empilage multicouches comprenant au moins successivement :

- Une couche en un matériau diélectrique à base d'au moins un composé chimique sélectionné parmi le groupe consistant en l'oxyde de silicium, le nitrure de silicium et l'oxynitrure de silicium, la couche en matériau diélectrique ayant une épaisseur optique d'au moins 10 nm et d'au plus 200 nm, préférentiellement d'au moins 20 nm et d'au plus 180 nm ;
- Une couche métallique absorbant le rayonnement solaire comprenant de 20 à 75%, de préférence de 45 à 65% en poids de zirconium et au moins 25%, de préférence au moins 35% en poids de chrome, et ayant une épaisseur géométrique d'au moins 1 nm, préférentiellement d'au moins 3 nm, et d'au plus 30 nm, préférentiellement d'au moins 3 nm et d'au plus 25 nm ;
- Une couche en un matériau diélectrique ayant une épaisseur optique d'au moins 15 nm et d'au plus 400 nm, de préférence entre 20 et 200 nm, à base d'au moins un composé chimique sélectionné parmi le groupe consistant en nitrure de silicium et oxynitrure de silicium.

Selon une mise en oeuvre préférée de la première forme du second mode de réalisation, le système de couches comprend n couches métalliques supplémentaires à base d'argent, avec n≥1, chaque couche métallique supplémentaire à base d'argent étant entourée de couches en matériau diélectrique, et comprend au moins une fois la succession suivante de couches : « nitrure de silicium ou d'aluminium ou leur mélange / couche absorbant le rayonnement solaire / nitrure de silicium ou d'aluminium ou leur mélange / oxyde transparent intercalaire / couche de mouillage à base d'oxyde de zinc / couche métallique supplémentaire à base d'argent », dans laquelle la couche métallique supplémentaire à base d'argent a une épaisseur géométrique d'au moins 8 nm et la couche absorbant le rayonnement solaire a une épaisseur géométrique comprise entre 0,5 et 8 nm. Il peut s'agir d'un système de couches ayant deux ou trois, voire quatre, couches métalliques à base d'argent, une couche absorbant le rayonnement solaire, entourée de ses couches diélectriques spécifiques, étant disposée de préférence entre la première et la seconde couche à base d'argent en partant du substrat. On a découvert que cette succession particulière de couches permet de réduire fortement, ou d'éviter, la formation de taches colorées que l'on observe après traitement thermique lorsque cette séquence n'est pas respectée, et en particulier lorsque la couche d'oxyde transparent intercalaire n'est pas présente entre le couche de nitrure qui protège la couche absorbant le rayonnement solaire et la couche de mouillage à base de ZnO. On a constaté aussi que, grâce à la présence de cette couche d'oxyde intercalaire, la résistance électrique superficielle, et donc également l'émissivité, était au moins conservée, voire réduite de manière bénéfique, à la suite du traitement thermique au lieu d'augmenter de manière indésirable au cours du traitement thermique.

Selon une mise en oeuvre préférée de la seconde forme du second mode de réalisation, le vitrage selon l'invention est tel qu'il comporte sur au moins l'une des faces d'un substrat verrier un empilage multicouches comprenant au moins successivement :

- Une couche en un matériau diélectrique à base d'au moins un composé chimique sélectionné parmi le groupe consistant en nitrure ou oxynitrure de silicium et/ou d'aluminium, la couche en matériau diélectrique ayant une épaisseur optique d'au moins 10 nm et d'au plus 200 nm, préférentiellement d'au moins 20 nm et d'au plus 180 nm,
- Une couche métallique absorbant le rayonnement solaire comprenant de 20 à 75%, de préférence de 45 à 65% en poids de zirconium et au moins 25%, de préférence au moins 35% en poids de chrome, et ayant une épaisseur géométrique d'au moins 0,5 nm, préférentiellement d'au moins 1 nm, et d'au plus 8 nm, préférentiellement d'au moins 1 nm et d'au plus 5 nm,
- Une couche métallique supplémentaire à base d'argent ayant une épaisseur géométrique d'au moins 9 nm, préférentiellement d'au moins 13 nm, et d'au plus 22 nm,
- Une seconde couche métallique absorbant le rayonnement solaire comprenant de 20 à 75%, de préférence de 45 à 65% en poids de zirconium, le complément étant formé de chrome, et ayant une épaisseur géométrique d'au moins 0,5 nm, préférentiellement d'au moins 1 nm, et d'au plus 8 nm, préférentiellement d'au moins 1 nm et d'au plus 5 nm,
- Une couche en un matériau diélectrique à base de nitrure ou d'oxynitrure de silicium ayant une épaisseur optique d'au moins 15 nm et d'au plus 400 nm, de préférence entre 20 et 200 nm.

Selon les quatre mises en oeuvre précédentes, d'autres couches additionnelles peuvent être ajoutées, soit directement sur le substrat, soit en tant que couche externe de protection, soit à l'intérieur de l'empilage de l'empilage multicouches, afin de procurer à l'empilage multicouches de base des propriétés et/ou des protections supplémentaires, telles que par exemple une protection externe supplémentaire contre les agressions mécaniques ou chimiques, une barrière contre les alcali provenant du substrat, des propriétés optiques différentes, une amélioration des propriétés électriques des couches métalliques, une amélioration du taux de dépôt, ou toute fonction supplémentaire. Les couches additionnelles doivent toutefois de préférence être choisies afin qu'elles ne perturbent pas l'aptitude de l'empilage multicouches à subir un traitement thermique à haute température. En particulier, on veillera avantageusement à ce que ces couches additionnelles ne subissent pas de modifications substantielles, et notamment des modifications de structure, lors du traitement thermique pour éviter qu'elles n'entraînent des modifications des propriétés optiques de l'empilage multicouches au cours du traitement thermique.

Les traitements thermiques, notamment de type bombage/trempe, peuvent aussi induire des modifications plus ou moins sensibles des propriétés optiques et notamment des teintes. Préférentiellement, ces variations doivent être minimisées de telle sorte que traités ou non thermiquement les vitrages présentent une apparence pratiquement inchangée.

Traditionnellement la mesure des variations colorimétriques s'effectue à partir des coordonnées du système CIELAB. La variation colorimétrique est exprimée par l'expression notée ∆E*, expression correspondant à la formule :

$$\Delta E^* = (\Delta L^{*2} + \Delta a^{*2} + \Delta b^{*2})^{1/2}$$

où ∆L* représente la différence entre les coordonnées colorimétriques L* du vitrage avant et après traitement thermique,

∆a* représente la différence entre les coordonnées colorimétriques a* du vitrage avant et après traitement thermique,

∆b* représente la différence entre les coordonnées colorimétriques b* du vitrage avant et après traitement thermique,

Plus particulièrement, et de préférence, le vitrage selon l'invention présente une variation colorimétrique en réflexion côté face verre, $\Delta E^*_{Rg}$ :

$$\Delta E^*_{Rg} = (\Delta L^*_{Rg}{}^2 + \Delta a^*_{Rg}{}^2 + \Delta b^*_{Rg}{}^2)^{1/2}$$

inférieure à 8, préférentiellement inférieure à 5, avantageusement inférieure à 3, et même préférentiellement inférieure à 2, lorsque ledit vitrage est soumis à une température d'au moins 630°C et d'au plus 670°C pendant 7 minutes.

L'invention est particulièrement utile pour l'obtention d'une très bonne stabilité de la teinte en réflexion côté substrat lors d'un traitement thermique à température élevée de trempe et/ou bombage. La teinte en réflexion côté substrat est, dans beaucoup d'applications, la teinte la plus remarquée d'un observateur, car c'est cette face qui attire son attention selon les conditions d'utilisation du vitrage. La moindre différence de teinte est donc plus facilement apparente.

Les inventeurs ont constaté que, de manière surprenante, l'invention, avec la couche métallique absorbante à base de chrome et de zirconium, permet d'atteindre une stabilité de teinte exceptionnelle en réflexion côté verre qu'on ne parvenait pas à atteindre aussi aisément avec les propositions de l'Art Antérieur, et notamment en utilisant du NiCr comme matière absorbante tel que proposé antérieurement.

De plus, l'invention permet d'accroître quelque peu la réflexion lumineuse côté substrat, ce qui est souvent désiré dans les demandes commerciales.

De manière additionnelle, le vitrage selon l'invention présente aussi, de préférence, une variation colorimétrique en transmission, $\Delta E^*_{TL}$ :

$$\Delta E^*_{TL} = (\Delta L^*_{TL}{}^2 + \Delta a^*_{TR}{}^2 + \Delta b^*_{TL}{}^2)^{1/2}$$

inférieure à 8, préférentiellement inférieure à 5, plus préférentiellement inférieure à 3, lorsque ledit vitrage est soumis à une température d'au moins 630°C et d'au plus 670°C pendant 7 minutes.

Le vitrage selon l'invention présente de manière additionnelle ou non aux deux propriétés précédentes, une variation colorimétrique en réflexion côté face couche, $\Delta E^*_{Rc}$, telle que :

$$\Delta E^*_{Rc} = (\Delta L^*_{Rc}{}^2 + \Delta a^*_{Rc}{}^2 + \Delta b^*_{Rc}{}^2)^{1/2}$$

inférieure 8, préférentiellement inférieure à 5, lorsque ledit vitrage est soumis à une température d'au moins 630°C et d'au plus 670°C pendant 7 minutes.

Selon un mode de réalisation particulier, le vitrage selon l'invention est tel que l'épaisseur de la couche métallique absorbant le rayonnement solaire est choisie de façon à ce que la transmission lumineuse pour un substrat constitué de verre clair de 4 mm d'épaisseur soit au moins égale à 2% et au plus égale à 75%. Dans le cas de l'utilisation en tant que toit de véhicule automobile, la transmission lumineuse sera de préférence entre 2 et 10%, avantageusement entre 6 et 8%. Dans le cas d'application en bâtiment, la transmission lumineuse sera de préférence entre 10 et 70%, avantageusement entre 10% et 60%, favorablement entre 10 et 50%, et préférentiellement entre 20 et 40%. En effet, la couche métallique absorbant le rayonnement solaire commande les transmissions lumineuses et énergétiques, de sorte que plus celle-ci est épaisse plus elle absorbe.

Selon un mode particulier de réalisation, le vitrage selon l'invention est tel que l'épaisseur optique des couches diélectriques est choisie de manière à ce que la réflexion côté couches soit d'au moins 1% et d'au plus 55%. Les couches diélectriques, en particulier la couche supérieure commande notamment la réflexion du système. De manière connue l'alternance des couches à indice de réfraction fort et faible, permet de maîtriser la réflexion. L'épaisseur des couches est aussi un facteur déterminant. Dans la limite des épaisseurs indiquées précédemment, l'augmentation de l'épaisseur de la couche en matériau diélectrique située au-dessus de la couche métallique absorbant le rayonnement solaire, réduit l'intensité de la réflexion du côté couche et augmente la réflexion du côté substrat.

En variante, lorsque l'on désire une faible réflexion lumineuse, notamment côté couche, on dispose de préférence deux, voire plus, couches fonctionnelles formées de couches métalliques absorbant le rayonnement solaire avec une couche diélectrique entre ces deux couches, selon la structure suivante, par exemple : couche diélectrique telle que décrite en revendication principale / couche absorbant le rayonnement solaire / couche diélectrique telle que décrite en revendication principale / couche absorbant le rayonnement solaire / couche diélectrique telle que décrite en revendication principale. L'épaisseur totale désirée pour l'absorption du rayonnement solaire est subdivisée en deux, voire en autant de couches absorbantes utilisées. A titre d'exemple illustratif, voici une structure concrète préférée : $Si_3N_4$/CrZr/$Si_3N_4$/CrZr/$Si_3N_4$. Cette structure facilite l'obtention d'une très faible réflexion lumineuse côté couche, par exemple 2% seulement, ou même seulement 1%.

Selon un mode préféré de réalisation de l'invention, la réflexion lumineuse mesurée du côté substrat est d'au moins 27%, de préférence d'au moins 30%, et avantageusement d'au moins 35%. Cette caractéristique permet d'obtenir un effet esthétique agréable et fort apprécié au niveau du marché commercial dans certaines régions, notamment par l'aspect brillant de la face du vitrage.

L'empilage multicouches du vitrage selon l'invention permet d'obtenir plus aisément cet effet esthétique, notamment en ajustant adéquatement l'épaisseur optique des diélectriques afin de gérer correctement l'effet d'interférence optique. Un moyen adéquat consiste à limiter l'épaisseur optique du premier revêtement diélectrique, disposé entre le substrat et la couche absorbant le rayonnement solaire, à une valeur faible. Cependant, cette solution présente une limite car l'épaisseur de ce premier revêtement diélectrique doit être suffisante pour permettre le traitement thermique à température élevée du système de couche sans détérioration de ses propriétés, notamment à cause de la migration d'éléments provenant du substrat. Un autre moyen préféré consiste à ce que le second revêtement diélectrique, disposé au-dessus de la couche absorbant le rayonnement solaire, ait une épaisseur optique élevée et comprise dans une gamme spécifique. De préférence, le second revêtement diélectrique, disposé au-dessus de la couche absorbant le rayonnement solaire, a une épaisseur optique (épaisseur géométrique multipliée par l'indice de réfraction du matériaux) comprise entre 70 et 170 nm, de préférence entre 80 et 140 nm, et avantageusement entre 110 et 130 nm.

De préférence, la réflexion lumineuse mesurée du côté substrat est au moins 2 fois, avantageusement au moins 2,5 fois, et préférentiellement au moins 3 fois supérieure à la réflexion lumineuse mesuré du côté de l'empilage multicouches. De préférence, la réflexion lumineuse mesurée du côté substrat est d'au moins 15%, avantageusement d'au moins 20%, supérieure à la réflexion lumineuse mesurée du côté de l'empilage multicouches. Etant donné que pour obtenir le meilleur effet de contrôle solaire, la couche est disposée en position 2 (en partant de l'extérieur), cette caractéristique permet d'obtenir une réflexion extérieure (mesurée du côté du substrat) permettant la réalisation de l'effet esthétique agréable recherché tout en évitant l'effet miroir lorsqu'on regarde au travers du vitrage à partir de l'intérieur de l'espace fermé par le vitrage, améliorant ainsi la transmission lumineuse et la visibilité au travers du vitrage. Cette combinaison d'une réflexion extérieure élevée, pour obtenir un effet esthétique recherché, avec une réflexion intérieure faible est une caractéristique essentielle de ce mode de réalisation de l'invention. L'effet miroir vu de l'intérieur empêchant une vision correcte au travers du vitrage à partir de l'enceinte fermée par le vitrage est ainsi évitée. Une épaisseur optique élevée du second revêtement diélectrique est une condition primordiale.

Selon un mode de réalisation avantageux pour obtenir cette différence de réflexion lumineuse entre le côté substrat et le côté de l'empilage multicouches, le revêtement en matériau diélectrique disposé au-dessus de la couche absorbant le rayonnement solaire comprend un matériau ayant un indice de réfraction élevé, supérieure à 2. Dans le cadre de la présente invention, ce diélectrique à haut indice de réfraction est un matériau qui supporte le traitement thermique sans modification structurelle significative. Un exemple spécifique d'un tel matériau est de l'oxyde de titane dopé, par exemple avec du zirconium ou du niobium, notamment un mélange d'oxyde de titane et d'oxyde de zirconium à raison de 40 à 60% chacun. Un autre exemple d'un tel matériau est l'oxyde de zirconium. De préférence, ce matériau à haut indice est disposé entre la couche absorbant le rayonnement solaire et la couche diélectrique la plus extérieure de l'empilage.

De préférence, le système de couches se termine par une fine couche de protection à base d'un oxyde mixte titane-zirconium.

Les vitrages selon l'invention trouvent des applications diverses en adaptant leurs propriétés par un ajustement des couches et notamment de leurs épaisseurs.

Les vitrages selon l'invention peuvent faire partie de vitrages doubles et dans ce cas l'empilage multicouches peut être disposé dans l'espace entre les deux feuilles de verre, ce qui limite les risques d'altération notamment mécanique. Néanmoins une des caractéristiques significative des empilages multicouches proposés pour les vitrages selon l'invention est leur résistance tant mécanique que chimique. Dans les modes de réalisation sans couche métallique supplémentaire à base d'argent ou avec couche métallique supplémentaire à base d'argent mais sans oxyde dans l'empilages multicouches, cette résistance est telle qu'ils peuvent être utilisés avec l'empilage multicouches exposé sans autre protection. Dans ce dernier cas le vitrage peut aussi bien se composer d'une seule feuille de verre, les empilages multicouches étant appliqués sur une face de cette feuille. Il peut aussi s'agir d'un vitrage feuilleté comprenant deux feuilles de verre, ou plus, les feuilles étant réunies au moyen de feuilles intercalaires de matériau thermoplastique suivant les techniques traditionnelles dans ce domaine.

Dans ces applications sur un vitrage unique l'empilage multicouches n'est pas protégé de l'environnement. Même dans le cas de vitrage feuilleté, les couches peuvent être sur une face externe pour qu'elles puissent jouer leur rôle dans le contrôle de transmission énergétique en agissant sur l'émissivité de la surface.

Lorsque la fonctionnalité privilégiée est le caractère bas-émissif du vitrage, l'empilage multicouches est de préférence disposé sur la face tournée vers l'intérieur du véhicule ou du bâtiment. Cette position conduit à la réflexion la plus importante des rayons infrarouges de grandes longueur d'onde pour conserver la chaleur à l'intérieur de l'habitacle ou du bâtiment. Pour les véhicules cette position correspond à la couche sur la face tournée vers l'habitacle. Dans cette position l'empilage multicouches résiste d'autant mieux que les sollicitations, notamment pour les vitrages fixes (toit, lunette...) sont relativement limitées.

Le vitrage selon l'invention trouve donc son application comme élément vitré de véhicule automobile : toit, pare-brise, fenêtre latérale, lunette arrière (l'empilage multicouches étant de préférence sur la face exposée vers l'habitacle) et élément de vitrage de bâtiments.

Plus particulièrement, le vitrage selon l'invention trouve son application comme toit ouvrant pour véhicule automobile.

En effet les constructeurs automobiles sont à la recherche d'une solution qui évite le placement d'un rideau (voile) en toiture pour la protection contre le soleil. L'absence de ce rideau conduit à un gain de poids ($\sim$ 6 kg) et donc à une moindre consommation de combustible, d'où moins de $CO_2$ rejeté. Sans aucun rideau, le confort thermique doit être malgré tout garanti pour les passagers, c'est-à-dire pas de surchauffe en été et pas de sensation de paroi froide en hiver. Dans un véhicule électrique, il n'y a pas de chaleur provenant du moteur thermique pouvant être utilisée pour réchauffer l'habitacle du véhicule et la chaleur du corps doit être absolument maintenue à l'intérieur (pas de perte par le toit).

Le vitrage selon l'invention trouve aussi son application comme élément vitré d'appareil électroménager tel qu'une porte de four, où il peut aussi apporter un effet esthétique recherché. Il résiste bien aux différentes agressions chimiques et/ou mécaniques dues à ce type particulier d'application.

Comme déjà indiqué ci-dessus à plusieurs reprises, le vitrage selon l'invention trouve bien sûr également son application comme élément vitré d'un bâtiment. Dans ce cas d'application, le vitrage peut former un vitrage double ou triple avec l'empilage multicouches disposé face à l'espace clos à l'intérieur du vitrage multiple. Le vitrage peut aussi former un vitrage feuilleté dont l'empilage multicouches peut être en contact avec la matière adhésive thermoplastique reliant les substrats, en général, du PVB. Le vitrage selon l'invention est toutefois particulièrement utile lorsque l'empilage multicouches est face à l'environnement externe, que ce soit un simple vitrage ou un vitrage feuilleté, mais aussi éventuellement un vitrage multiple.

Bien entendu, le substrat verrier peut être un verre teinté dans la masse, tel qu'un verre gris, bleu ou vert, pour absorber en plus le rayonnement solaire, ou pour former un espace privé à faible transmission lumineuse afin de dissimuler l'habitacle du véhicule, ou un bureau dans un bâtiment, aux regards externes.

En variante des différents modes de réalisation incluant une couche métallique supplémentaire à base d'argent, l'invention inclut également l'introduction non seulement d'une seule couche métallique à base d'argent mais également de deux, ou même trois, voire quatre, couches métalliques à base d'argent. Dans ce cas, la ou les couches métalliques absorbant le rayonnement solaire peuvent être disposées à proximité immédiate (de part et d'autre ou d'un côté ou de l'autre) de plusieurs, ou de chaque, couches à base d'argent. Selon un premier mode de mise en oeuvre de cette variante, les couches métalliques absorbant le rayonnement solaire seront de préférence disposées de part et d'autre de la première couche métallique à base d'argent en partant du substrat. Selon un second mode de mise en oeuvre de cette variante, les couches métalliques absorbant le rayonnement solaire seront de préférence disposées entre deux couches diélectriques d'un même revêtement diélectrique. Des couches diélectriques à base de nitrure ou oxynitrure de silicium et/ou d'aluminium sont de préférence disposées entre chaque couche métallique à base d'argent selon une répétition des exemples à une seule couche fonctionnelle.

**5. Description de modes préférés de réalisation de l'invention**

Des exemples de vitrages selon l'invention mais également des exemples comparatifs (« R ») sont donnés dans le tableau I ci-après. Les propriétés optiques sont définies, en verre simple, pour des vitrages dont le substrat est en verre "float" ordinaire clair de 4 mm d'épaisseur. Les couches sont dans l'ordre, de gauche à droite, en partant du verre. Les épaisseurs géométriques approximatives sont exprimées en nm.

Tableau I et Ibis : Exemples de vitrages selon l'invention et comparatifs des performances de vitrages selon l'invention avec des vitrages de l'art antérieur, les revêtements étant déposés sur du verre clair ayant une épaisseur de 4 mm. Les transmissions lumineuses (TL) et les réflexions lumineuses côté couche (Rc) et côté verre (Rg) sont aussi indiquées (en %) pour certains exemples. Dans les exemples comparatifs ci-après, NiCr est un alliage à 80% de Ni et 20% en poids de Cr. Dans les exemples selon l'invention ci-après, CrZr est un alliage à 40% de Cr et 60% en poids de Zr.

**Tableau I** :

| Ex. | Revêtement | TL | Rc | Rg | $\Delta E^*_{Tl}$ | $\Delta E^*_{Rg}$ |
|---|---|---|---|---|---|---|
| 1R | SiN (20nm)/NiCr (8,5nm)/SiN (35nm) | 39 | 11 | 17 | 1,70 | 3,84 |
| 2R | SiN (20nm)/NiCr (13,7nm)/SiN (35nm) | 27 | 15 | 25 | 2,61 | 2,32 |
| 3R | SiN (20nm)/NiCr (22nm)/SiN (35nm) | 14 | 22 | 36 | 3,56 | 1,74 |
| 4R | SiN (87nm)/NiCr (13,7nm)/SiN (30nm) | 28 | 22 | 17 | 1,95 | 4,60 |
| 1 | SiN (20nm)/CrZr (12,5nm)/SiN (35nm) | 34 | 17 | 25 | 0,96 | 0.30 |
| 2 | SiN (20nm)/CrZr (20,5nm)/SiN (35nm) | 23 | 20 | 32 | 3,25 | 1.03 |
| 3 | SiN (20nm)/CrZr (33nm)/SiN (35nm) | 12 | 22 | 39 | 3,72 | 0.96 |
| 4 | SiN (87nm)/CrZr (20,5nm)/SiN (30nm) | 23 | 24 | 23 | 2,76 | 1.74 |

**Tableau Ibis:**

| Ex. | Revêtement (épaisseur en nm) | | | | | TL | Rc | Rg | $\Delta E^*_{Tl}$ | $\Delta E^*_{Rc}$ | $\Delta E^*_{Rg}$ |
|---|---|---|---|---|---|---|---|---|---|---|---|
| | SiN | CrZr | SiN | CrZr | SiN | | | | | | |
| 18 | 28,5 | 7,8 | 27,4 | 0,0 | 0,0 | 33,3 | 24,1 | 17,4 | 0,8 | 1,1 | 1,2 |
| 19 | 22,9 | 7,9 | 23,9 | 0,0 | 0,0 | 31,1 | 25,4 | 17,6 | 0,7 | 0,9 | 1,1 |
| 20 | 10,0 | 4,3 | 34,0 | 2,0 | 26,5 | 38,4 | 9,0 | 25,0 | 0,7 | 1,7 | 1,3 |
| 21 | 26,0 | 11,0 | 46,0 | 0,0 | 0,0 | 32,6 | 7,4 | 31,0 | 0,5 | 7,3 | 0,6 |
| 22 | 54,1 | 4,4 | 64,5 | 7,0 | 44,8 | 22,5 | 5,2 | 6,6 | 1,1 | 2,5 | 2,6 |
| 23 | 22,9 | 7,9 | 23,9 | 0,0 | 0,0 | 31,1 | 25,4 | 17,6 | 0,7 | 0,9 | 1,1 |
| 24 | 72,1 | 4,0 | 50,9 | 6,5 | 20,0 | 20,9 | 16,2 | 8,3 | 1,1 | 0,6 | 0,6 |
| 25 | 54,5 | 2,9 | 89,4 | 9,6 | 34,2 | 21,2 | 19,8 | 12,0 | 1,2 | 2,0 | 2,3 |
| 26 | 95,0 | 5,7 | 70,7 | 4,5 | 19,0 | 20,9 | 21,9 | 13,5 | 0,7 | 2,3 | 2,2 |
| 27 | 100,0 | 1,8 | 28,7 | 5,1 | 51,0 | 38,6 | 3,4 | 26,5 | 0,7 | 0,9 | 3,9 |
| 28 | 100,0 | 1,8 | 28,7 | 5,1 | 47,0 | 38,5 | 3,6 | 25,5 | 0,7 | 1,0 | 3,7 |
| 29 | 129,1 | 5,2 | 52,0 | 0,0 | 0,0 | 45,8 | 4,9 | 30,0 | 0,9 | 1,2 | 3,8 |
| 30 | 140,0 | 6,8 | 39,0 | 0,0 | 0,0 | 37,4 | 10,3 | 26,3 | 1,0 | 2,6 | 3,6 |
| 31 | 138,0 | 6,8 | 39,0 | 0,0 | 0,0 | 37,4 | 10,1 | 26,0 | 1,0 | 2,2 | 3,6 |
| 32 | 39,0 | 1,0 | 79,3 | 6,0 | 118,7 | 29,0 | 28,0 | 13,9 | 1,4 | 2,6 | 1,8 |
| 33 | 17,7 | 4,4 | 60,0 | 4,9 | 25,0 | 24,6 | 14,1 | 9,8 | 0,6 | 0,1 | 0,6 |

(suite)

| Ex. | Revêtement (épaisseur en nm) | | | | | TL | Rc | Rg | $\Delta E^*_{Tl}$ | $\Delta E^*_{Rc}$ | $\Delta E^*_{Rg}$ |
|---|---|---|---|---|---|---|---|---|---|---|---|
| | SiN | CrZr | SiN | CrZr | SiN | | | | | | |
| 34 | 78,3 | 3,0 | 69,4 | 5,8 | 62,6 | 30,9 | 4,7 | 10,8 | 1,8 | 7,8 | 4,6 |
| 35 | 15,0 | 6,1 | 55,0 | 5,5 | 33,7 | 19,2 | 8,8 | 13,2 | 0,6 | 0,4 | 0,3 |
| 36 | 15,0 | 6,1 | 57,5 | 5,5 | 33,7 | 19,0 | 9,0 | 12,6 | 0,7 | 0,5 | 0,3 |
| 37 | 14,6 | 4,7 | 62,1 | 3,1 | 95,0 | 27,6 | 16,7 | 12,1 | 0,4 | 1,2 | 2,5 |
| 38 | 14,6 | 4,7 | 62,1 | 3,1 | 92,5 | 28,2 | 15,9 | 11,8 | 0,4 | 1,3 | 2,4 |
| 39 | 9,5 | 5,7 | 61,3 | 3,3 | 100,0 | 23,9 | 15,4 | 15,7 | 0,4 | 2,2 | 2,3 |
| 40 | 90,0 | 12,0 | 12,0 | 0,0 | 0,0 | 19,0 | 42,3 | 17,4 | 1,3 | 0,8 | 3,8 |
| 41 | 24,2 | 19,9 | 25,0 | 0,0 | 0,0 | 47,0 | 39,8 | 37,3 | 3,6 | 4,2 | 3,4 |

Les couches métalliques absorbant le rayonnement solaire et les couches diélectriques sont appliquées par une technique de pulvérisation cathodique ("sputtering") dans des conditions usuelles pour ce type de technique. En variante, les couches diélectriques sont appliquées par la technique bien connue appelée PECVD (« Plasma-Enhanced Chemical Vapor Deposition ») ou dépôt chimique en phase vapeur assisté par plasma.

Les couches diélectriques de nitrure de silicium sont produites à partir de cibles métalliques dans une atmosphère constituée d'un mélange d'argon (30-70%) et d'azote (70-30%) sous une pression totale de 4mTorr (0,53Pa). Les couches de chrome-zirconium (40% en poids de Cr et 60% de zirconium dans l'alliage CrZr) sont déposées à partir de cathodes métalliques en atmosphère d'argon seul. En variante, l'atmosphère de dépôt de cet alliage métallique CrZr comprend un peu d'azote ou d'oxygène provenant des zones de dépôt voisines. Il en résulte que la couche CrZr formée, tout en conservant son caractère essentiellement métallique, contient un peu d'azote ou d'oxygène. Les propriétés obtenues sont similaires. Les couches diélectriques d'oxyde de silicium sont produites au départ d'une cible à base de silicium dans une atmosphère contenant de l'argon et de l'oxygène.

Sur les échantillons on mesure la transmission lumineuse TL et la réflexion lumineuse du côté substrat avec l'Illuminant D65, 2°. Les coordonnées colorimétriques L*, a*, b*, CIE, sont également mesurées avant et après traitement thermique ave l'Illuminant D65, 10°. L'angle sous lequel les mesures sont faites est de 8°.

Les échantillons sont soumis à un traitement thermique comprenant le maintien à 670°C pendant 7 min et 30 sec. Les variations de transmission et de réflexion en $\Delta E^*$ sont également données dans les tableaux. Dans les exemples, les notations SiN désignent les nitrures de silicium sans représenter une formule chimique, étant entendu que les produits obtenus ne sont pas nécessairement rigoureusement stoechiométriques, mais sont ceux obtenus dans les conditions de dépôt indiquées et qui sont voisins des produits stoechiométriques. Les couches en SiN peuvent contenir jusqu'à environ maximum 10% en poids d'aluminium provenant de la cible. La couche diélectrique selon l'invention peut en outre être constituée de plusieurs couches individuelles comprenant ou consistant essentiellement en ces mêmes matériaux.

Les résistances mécanique et chimique des vitrages selon l'invention sans couche à base d'argent sont caractérisées par le passage avec succès des tests définis dans la norme EN1096-2 pour les revêtements dits de classe B. En outre, les vitrages selon l'invention satisfont également aux exigences des tests suivants :

- au brouillard salin (NSS: *Neutral Salt Spray*) selon la norme ISO 9227-2006, de préférence pendant au moins 10 jours;
- à la chambre climatique selon la norme EN1036-2008, de préférence pendant au moins 10 jours; et
- au test Cleveland selon la norme ISO 6270-1:1998, de préférence pendant au moins 10 jours;
- au test de résistance acide ($SO_2$) selon la norme EN 1096-2.
- Au test AWRT (*Automatic web rub test*) décrit ci-après : Un piston recouvert d'un tissu en coton est mis en contact avec la couche à évaluer et oscille sur sa surface. Le piston porte un poids de manière à appliquer une force de 33N sur un doigt de 17 mm de diamètre. L'abrasion du coton sur la surface revêtue va endommager (enlever) la couche après un certain nombre de cycles. Le test est utilisé pour définir la limite avant que la couche ne se décolore (enlèvement partiel de la couche) et que des griffes n'apparaissent dans la couche. Le test est réalisé pour 10, 50, 100, 250, 500 et 1000 cycles, à divers endroits séparés sur l'échantillon. L'échantillon est observé sous un ciel artificiel pour déterminer si une décoloration ou des griffes peuvent être vues sur l'échantillon. Le résultat AWRT indique le nombre de cycles ne donnant pas ou très peu de dégradation (non visible à l'oeil nu sous un ciel artificiel uniforme à 80 cm de distance de l'échantillon).

- au test DBT (Dry Brush test) selon la norme ASTM D2486-00 (méthode de test "A"), de préférence pendant au moins 1000 cycles

et ce avant et après éventuel traitement thermique.

**Tableau II :** Les exemples suivants ont été réalisés avec d'autres proportions de Cr et de Zr dans l'alliage métallique absorbant le rayonnement solaire. De même que pour les exemples précédents, les numéros d'exemples portant la lettre (« R ») sont des exemples comparatifs, les numéros sans cette lettre sont des exemples selon l'invention. Les résultats (OK pour bon ; KO pour inacceptable ; et S pour satisfaisant) de deux tests de résistance chimique sont aussi indiqués : chambre climatique (CC) et test Cleveland (Clev).

La même structure suivante a été utilisée : 30 nm SiN/15 nm couche fonctionnelle/30 nm SiN (SiN signifie $Si_3N_4$, éventuellement dopé à l'aluminium pour rendre conductrice la cible de silicium de départ). Les différentes couches sont déposées de la même manière que dans les exemples précédents. La constitution de la couche fonctionnelle est donnée dans la tableau II ci-dessous. Les pourcentages Cr et Zr par rapport à l'alliage total sont donnés en poids.

| Ex. | Couche fonctionnelle | $\Delta E^*_{TI}$ | $\Delta E^*_{Rc}$ | $\Delta E^*_{Rg}$ | TL | Rc | Rg | CC | Clev |
|---|---|---|---|---|---|---|---|---|---|
| 5 | 80% Cr/20% Zr | 1,44 | 1,44 | 1,55 | 21 | 30 | 28 | OK | OK |
| 6 | 60% Cr/40% Zr | 0,94 | 1,65 | 1,80 | 24 | 27 | 25 | OK | OK |
| 7 | 40% Cr/60% Zr | 0,63 | 1,43 | 1,46 | 26 | 25 | 22 | OK | OK |
| 8 | 25% Cr/75% Zr | 2,44 | 3,56 | 2,42 | 26 | 26 | 21 | OK | OK |

**Tableau III:** l'exemple comparatif et l'exemple selon l'invention d'empilages multicouches, déposé sur un substrat verrier, repris au tableau III ci-dessous présentent une couche métallique supplémentaire à base d'argent insérée entre deux couche métalliques absorbant le rayonnement solaire. Les conventions d'écriture sont les mêmes que pour les tableaux précédents.

| Ex. | Revêtement | TL | Rc | Rg | $\Delta E^*_{TI}$ | $\Delta E^*_{Rg}$ | CC | Clev |
|---|---|---|---|---|---|---|---|---|
| 5R | SiN (40nm)/NiCr (1nm)/Ag (18nm)/NiCr (1nm)/SiN (56nm) | 54 | 13 | 24 | 2,26 | 1,88 | OK | OK |
| 9 | SiN (40nm)/CrZr (1nm)/Ag (18nm)/CrZr (1nm)/SiN (56nm) | 59 | 15 | 23 | 1,61 | 1,03 | OK | OK |

La variation des épaisseurs des couches diélectriques, dans des limites raisonnables, n'affecte pas significativement la modification de teinte lors du traitement thermique, ni la durabilité, mais bien entendu elle modifie l'aspect esthétique (et en particulier la teinte) de départ.

Comme pour les exemples précédents, les couches métalliques absorbant le rayonnement solaire, les couches métalliques supplémentaires à base d'argent et les couches diélectriques sont appliquées par une technique de pulvérisation cathodique ("sputtering") dans des conditions usuelles pour ce type de technique. En variante, les couches diélectriques sont appliquées par la technique bien connue appelée PECVD (« Plasma-Enhanced Chemical Vapor Deposition ») ou dépôt chimique en phase vapeur assisté par plasma.

**Tableau IV :** les exemples 10-17 de l'empilage multicouches, déposé sur un substrat verrier, repris au tableau IV ci-dessous se rapportent plus particulièrement au mode de réalisation de l'invention selon lequel la réflexion lumineuse côté substrat est élevée, et en particulier plus élevée que la réflexion lumineuse côté de l'empilage multicouches. La couche absorbant le rayonnement solaire est un alliage comprenant 40% de chrome et 60% de zirconium. Les conventions d'écriture sont les mêmes que pour le tableau I. Les chiffres entre parenthèses sont les épaisseurs physiques en nm des différentes couches. Les propriétés (en % pour la transmission et la réflexion lumineuses) sont données en vitrage monolithique après traitement thermique. L'appellation « TZO » représente un oxyde mixte comprenant 50% de $TiO_2$ et 50% de $ZrO_2$.

| Ex. | Revêtement | TL | Rc | Rg |
|---|---|---|---|---|
| 10 | SiN (13)/CrZr (6,7)/SiN (50,6) | 33,8 | 7,4 | 34,6 |
| 11 | SiN (13)/CrZr (10,3)/SiN (46,7) | 23,5 | 13,8 | 39,9 |
| 12 | SiN (17)/CrZr (17)/SiN (40) | 12,6 | 29,2 | 45,5 |
| 13 | SiN (79,2)/CrZr (14)/SiN (50,1) | 22,2 | 15 | 30,9 |

(suite)

| Ex. | Revêtement | TL | Rc | Rg |
|---|---|---|---|---|
| 14 | SiN (16,4)/CrZr (7,6)/TZO (24,1)/SiN (25) | 31,3 | 8,6 | 39 |
| 15 | SiN (13)/CrZr (11,6)/TZO (21,4)/SiN (25) | 21,6 | 12,7 | 44,7 |
| 16 | SiN (13,4)/CrZr (21,3)/TZO (18,2)/SiN (31,3) | 10,8 | 15,7 | 51,2 |
| 17 | SiN (78)/CrZr (14,7)/TZO (22,5)/SiN (25,1) | 22 | 13,4 | 33 |

Le tableau Va ci-après donne des exemples avec deux couches métalliques supplémentaires à base d'argent, la couche absorbant le rayonnement solaire se trouvant dans le premier revêtement diélectrique disposé entre le substrat et la première couche à base d'argent. Les différentes couches sont déposées dans les mêmes conditions que pour les exemples du tableau I. Les propriétés sont mesurées de la même manière et sont données dans le tableau Vb. Les exemples du tableau Va ont aussi subi un traitement thermique identique à celui décrit pour les exemples du tableau I et les variations des propriétés sont, de la même manière, données en $\Delta E^*$, soit en transmission $\Delta E^*_{Tl}$ (ou $\Delta E^*_{tr}$), soit en réflexion côté couche ($\Delta E^*_{Rc}$), soit en réflexion côté substrat verrier ($\Delta E^*_{Rg}$). De plus, les coordonnées L*, a*, b*, et Y (qui représente soit la transmission lumineuse totale, soit la réflexion lumineuse totale) sont aussi indiquées en transmission (TL), en réflexion côté substrat verrier (Rg) et en réflexion côté systèmes de couches (Rc), ainsi que la variation de la transmission lumineuse totale ($\Delta_{TL}$), et la variation de la réflexion totale côté substrat verrier ($\Delta_{Rg}$) et côté système de couches ($\Delta_{Rc}$). L'appellation ZSO5 représente un oxyde mixte zinc-étain formé à partir d'une cathode d'un alliage zinc-étain à 52% en poids de zinc et 48% en poids d'étain pour former la structure spinelle de stannate de zinc $Zn_2SnO_4$. L'expression « AZO » se rapporte à un oxyde de zinc dopé avec de l'aluminium, obtenu par pulvérisation cathodique, à partir d'une cathode céramique formée par l'oxyde à déposer, en atmosphère neutre ou légèrement oxydante. En variante, AZO peut être remplacé par d'autres barrières bien connues dans le domaine et adaptées aux propriétés désirées pour le système de couche formé, comme par exemple un oxyde de Ti, dopé ou non avec du niobium ou du zirconium, obtenu de préférence à partir d'une cible céramique formée de l'oxyde à déposer, ou ZnO pur. B représente une couche barrière contre l'oxydation de l'argent bien connue dans le domaine. D représente une ou plusieurs couches diélectriques, notamment à base de stannate de zinc, de ZnO dopé ou non, ou d'un autre matériau connu dans le domaine et adapté à ce type d'empilage de couche, par exemple un nitrure tel qu'AlN. M représente la couche de mouillage à base de ZnO, dopé à l'aluminium ou non. IR représente les couches fonctionnelles réfléchissant le rayonnement infrarouge. ABS représente la couche absorbant le rayonnement solaire.

Les exemples donnés dans le tableaux VIa sont, de la même manière, des exemples avec deux couches métalliques supplémentaires à base d'argent comme pour le tableau Va, mais cette fois la couche absorbant le rayonnement solaire se trouve dans le second revêtement diélectrique disposé entre la première couche à base d'argent et la seconde couche à base d'argent. Les propriétés obtenues sont données dans le tableau VIb de la même manière que pour le tableau Vb. L'appellation $TZO_{65}$ signifie un oxyde mixte titane-zirconium avec 35% de zirconium et 65% de titane, différent de TZO (50/50).

Le tableau VIIa ci-après donne des exemples avec trois couches métalliques supplémentaires à base d'argent, la couche absorbant le rayonnement solaire se trouvant dans le premier revêtement diélectrique disposé entre le substrat et la première couche à base d'argent. Les propriétés correspondantes sont données dans le tableau VIIb, en verre simple, pour un substrat en verre clair de 6 mm d'épaisseur non traité thermiquement. La valeur du facteur solaire (g) est aussi indiquée.

Le tableau VIIIa ci-après donne aussi des exemples avec trois couches métalliques supplémentaires à base d'argent, mais cette fois la couche absorbant le rayonnement solaire se trouve dans le second revêtement diélectrique disposé entre la première couche à base d'argent et la seconde couche à base d'argent. Les propriétés correspondantes sont données dans le tableau VIIIb, en verre simple, pour un substrat en verre clair de 6 mm d'épaisseur non traité thermiquement. La valeur du facteur solaire (g) est aussi indiquée.

Bien entendu, l'invention n'est pas limitée aux exemples de réalisation mentionnés.

**Tableau Va :**

| Ex. | D1a | ABS | D1b | | M | IR1 | B | D2 | | | M | IR2 | B | D3 | | |
|---|---|---|---|---|---|---|---|---|---|---|---|---|---|---|---|---|
| | SiN | CrZr | SiN | ZSO5 | ZnO | Ag | AZO | ZSO5 | SiN | ZSO5 | ZnO | Ag | AZO | ZSO5 | SiN | TZO |
| 42 | 10 | 0,9 | 10 | 8 | 5 | 10,5 | 5 | 15,35 | 35 | 15,35 | 5 | 14,7 | 5 | 11,7 | 20 | 3 |
| 43 | 10 | 1,2 | 10 | 10,4 | 5 | 11,4 | 5 | 14,2 | 35 | 14,2 | 5 | 14,9 | 5 | 11,6 | 20 | 3 |
| 44 | 10 | 1,7 | 10 | 12,8 | 5 | 12,6 | 5 | 14,05 | 35 | 14,05 | 5 | 14,8 | 5 | 11,9 | 20 | 3 |

**Tableau Vb :**

| Ex. | $\Delta_{TL}$ | $\Delta_{Rc}$ | $\Delta_{Rg}$ | $\Delta E^*_{TL}$ | $\Delta E^*_{Rc}$ | $\Delta E^*_{Rg}$ | TL | | | | Rg | | | | Rc | | | |
|---|---|---|---|---|---|---|---|---|---|---|---|---|---|---|---|---|---|---|
| | | | | | | | Y | L* | a* | b* | Y | L* | a* | b* | Y | L* | a* | b* |
| 42 | -1,2 | 0,4 | 0,6 | 2,3 | 3,1 | 6,2 | 68,9 | 86,4 | -3,3 | 2,6 | 6,8 | 31,7 | 0,5 | -11,8 | 4,3 | 24,8 | -3,5 | -5,6 |
| 43 | 1,2 | 0,4 | -0,1 | 1,3 | 1,5 | 1,3 | 61,2 | 82,5 | -4,4 | 2,9 | 5,8 | 29,1 | 0 | -9,3 | 4,4 | 25 | 3 | -2,1 |
| 44 | 2,2 | 0,6 | -0,5 | 1,3 | 5,3 | 2,1 | 50,5 | 76,5 | -4,4 | -1,1 | 6,4 | 30,6 | 0,6 | -7,6 | 7,9 | 33,7 | -0,4 | 6,3 |

**Tableau VIa :**

| Ex. | D1 | M | IR1 | B | D2a | | ABS | D2b | | | M | IR2 | B | D3 | | P |
|---|---|---|---|---|---|---|---|---|---|---|---|---|---|---|---|---|
| | ZSO5 | ZnO | Ag | AZO | ZSO5 | SiN | CrZr | SiN | ZSO5 | | ZnO | Ag | AZO | ZSO5 | SiN | TZO |
| 45 | 34,0 | 4,0 | 14,7 | 5,5 | 22,5 | 20,0 | 0,6 | 25,0 | 10,5 | | 4,0 | 15,5 | 5,5 | 10,5 | 21,0 | 3,0 |
| 46 | 39,0 | 4,0 | 14,1 | 5,5 | 23,8 | 20,0 | 0,9 | 25,0 | 11,5 | | 4,0 | 15,5 | 5,5 | 10,2 | 21,0 | 3,0 |
| 47 | 39,0 | 4,0 | 16,6 | 5,5 | 22,7 | 20,0 | 1,3 | 25,0 | 10,7 | | 4,0 | 16,5 | 5,5 | 10,3 | 21,0 | 3,0 |
| | ZSO5 | ZnO | Ag | AZO | ZSO5 | SiN | CrZr | SiN | $TZO_{65}$ | | ZnO | Ag | AZO | ZSO5 | SiN | TZO |
| 48 | 38,0 | 4,0 | 14,1 | 5,5 | 24,1 | 20,0 | 0,9 | 25,0 | 10,0 | | 4,0 | 15,5 | 5,5 | 9,9 | 21,0 | 3,0 |
| | ZSO5 | ZnO | Ag | AZO | ZSO5 | SiN | CrZr | SiN | ZSO5 | $TZO_{65}$ | ZnO | Ag | AZO | ZSO5 | SiN | TZO |
| 49 | 42 | 4 | 14,1 | 5,5 | 24,8 | 20 | 0,9 | 25 | 9,2 | 3 | 4 | 15,5 | 5,5 | 8,4 | 21 | 3 |

**Tableau VIb :**

| Ex. | $\Delta_{TL}$ | $\Delta_{Rc}$ | $\Delta_{Rg}$ | $\Delta E^*_{TL}$ | $\Delta E^*_{Rc}$ | $\Delta E^*_{Rg}$ | TL | | | | Rg | | | | Rc | | | |
|---|---|---|---|---|---|---|---|---|---|---|---|---|---|---|---|---|---|---|
| | | | | | | | Y | L* | a* | b* | Y | L* | a* | b* | Y | L* | a* | b* |
| 45 | 2,0 | 1,4 | 0,8 | 0,9 | 3,9 | 2,7 | 60,3 | 81,9 | -4,1 | 4,8 | 11,9 | 41,2 | -2,6 | -8,0 | 6,9 | 32,0 | -2,2 | -16,2 |
| 46 | 1,2 | 1,8 | 0,3 | 1,5 | 4,4 | 2,5 | 55,9 | 79,6 | -4,5 | 3,6 | 12,3 | 41,8 | -2,2 | -4,8 | 5,9 | 29,6 | 0,6 | -16,4 |
| 47 | 1,0 | 2,1 | -0,4 | 2,1 | 5,4 | 1,4 | 39,3 | 69,0 | -5,8 | 1,8 | 20,7 | 52,6 | -1,3 | 1,1 | 7,6 | 33,7 | 5,4 | -18,9 |
| 48 | -0,7 | 2,0 | -0,1 | 2,0 | 5,2 | 2,2 | 55,9 | 79,6 | -4,4 | 3,7 | 12,3 | 41,8 | -1,9 | -4,9 | 5,9 | 29,6 | 0,5 | -15,4 |
| 49 | 2,8 | 1,6 | -0,8 | 1,6 | 4,7 | 2,0 | 55,9 | 79,6 | -4,6 | 3,5 | 12,3 | 41,8 | -2,3 | -4,7 | 5,9 | 29,6 | 0,4 | -17,4 |

Tableau VIIa

| Ex. | D1a | ABS | D1b | | M | IR1 | B | D2 | | | M | IR2 | B | D3 | | | M | IR3 | B | D4 | |
|---|---|---|---|---|---|---|---|---|---|---|---|---|---|---|---|---|---|---|---|---|---|
| | SiN | CrZr | SiN | ZSO5 | ZnO | Ag | AZO | ZSO5 | SiN | ZSO5 | ZnO | Ag | AZO | ZSO5 | SiN | ZSO5 | ZnO | Ag | AZO | ZSO5 | SiN |
| 50 | 16,2 | 1,8 | 13,4 | 1,1 | 5 | 11,5 | 4 | 20 | 20 | 21,1 | 5 | 15,2 | 4 | 15 | 17 | 29,1 | 5 | 16,2 | 4 | 14 | 18 |
| 51 | 16,2 | 1,8 | 13,4 | 1,1 | 5 | 11,5 | 4 | 61.1 | 0 | 0 | 5 | 15,2 | 4 | 32 | 0 | 29,1 | 5 | 16,2 | 4 | 14 | 18 |

**Tableau VIIb :**

| Ex. | g | $\Delta E^*_{TL}$ | $\Delta E^*_{Rc}$ | $\Delta E^*_{Rg}$ | TL | | | | Rg | | | | Rc | | | |
|---|---|---|---|---|---|---|---|---|---|---|---|---|---|---|---|---|
| | | | | | Y | L* | a* | b* | Y | L* | a* | b* | Y | L* | a* | b* |
| 50 | 37 | 3 | 4 | 8 | 36,5 | 80 | -6 | -0,8 | 6,7 | 31,1 | -3,9 | -0,9 | 2,9 | 19,6 | 12,8 | -9 |
| 51 | 37 | 3 | 4 | 8 | 36,5 | 80 | -6 | -0,8 | 6,7 | 31,1 | -3,9 | -0,9 | 2,9 | 19,6 | 12,8 | -9 |

Tableau VIIIa :

| Ex. | D1 | M | IR1 | B | D2a | | ABS | D2b | | M | IR2 | B | D3 | | | M | IR3 | B | D4 | |
|---|---|---|---|---|---|---|---|---|---|---|---|---|---|---|---|---|---|---|---|---|
| | ZSO5 | ZnO | Ag | AZO | ZSO5 | SiN | CrZr | SiN | ZSO5 | ZnO | Ag | AZO | ZSO5 | SiN | ZSO5 | ZnO | Ag | AZO | ZSO5 | SiN |
| 52 | 17,7 | 5 | 9,2 | 4 | 19 | 20 | 0,8 | 15 | 10 | 5 | 15,1 | 4 | 20 | 20 | 25,8 | 5 | 15,5 | 4 | 14 | 18,9 |

**Tableau VIIIb :**

| Ex. | g | $\Delta E^*_{TL}$ | $\Delta E^*_{Rc}$ | $\Delta E^*_{Rg}$ | TL | | | | Rg | | | | Rc | | | |
|---|---|---|---|---|---|---|---|---|---|---|---|---|---|---|---|---|
| | | | | | Y | L* | a* | b* | Y | L* | a* | b* | Y | L* | a* | b* |
| 52 | 37,5 | 1,5 | 7,1 | 3,5 | 57 | 80,3 | -5,9 | -1,5 | 5,1 | 27,1 | 1,6 | -5,8 | 4,1 | 24,8 | 5,4 | -13,5 |

**Revendications**

1. Vitrage de contrôle solaire comportant sur au moins l'une des faces d'un substrat verrier un empilage multicouches comprenant au moins une couche absorbant le rayonnement solaire et des revêtements diélectriques encadrant ladite couche absorbant le rayonnement solaire, **caractérisé en ce que** la couche absorbant le rayonnement solaire est une couche d'un alliage métallique à base de zirconium et de chrome, comprenant au minimum 25 % en poids de chrome et au minimum 20 % en poids de zirconium, l'empilage multicouches comprenant entre le substrat et la couche absorbant le rayonnement solaire, ainsi qu'au-dessus de la couche absorbant le rayonnement solaire, au moins un revêtement en matériau diélectrique à base d'un composé sélectionné parmi l'oxyde de silicium, l'oxyde d'aluminium, le nitrure de silicium, le nitrure d'aluminium, les nitrures mixtes d'aluminium-silicium, l'oxynitrure de silicium et l'oxynitrure d'aluminium.

2. Vitrage selon la revendication 1, **caractérisé en ce que** la couche absorbant le rayonnement solaire comprend de 25 à 75% en poids de zirconium.

3. Vitrage selon la revendication 2, **caractérisé en ce que** la couche absorbant le rayonnement solaire comprend de 45 à 65% en poids de zirconium.

4. Vitrage selon une quelconque des revendications précédentes, **caractérisé en ce que** la couche absorbant le rayonnement solaire a une épaisseur géométrique comprise entre 0,5 et 30 nm, de préférence comprise entre 2 et 25 nm.

5. Vitrage selon la revendication 4, **caractérisé en ce que** la couche absorbant le rayonnement solaire a une épaisseur géométrique comprise entre 10 et 25 nm, et de préférence comprise entre 12 et 22 nm.

6. Vitrage selon la revendication 4, **caractérisé en ce que** la couche absorbant le rayonnement solaire a une épaisseur géométrique comprise entre 0,5 et 10 nm, et de préférence comprise entre 2 et 5 nm.

**7.** Vitrage selon une quelconque des revendications précédentes, **caractérisé en ce que** la couche en matériau diélectrique entre le substrat et la couche absorbant le rayonnement solaire a une épaisseur optique d'au moins 10 nm et d'au plus 200 nm, préférentiellement d'au moins 20 nm et d'au plus 180 nm.

**8.** Vitrage selon une quelconque des revendications précédentes, **caractérisé en ce que** la couche en matériau diélectrique située au-dessus de la couche absorbant le rayonnement solaire a une épaisseur optique d'au moins 15 nm et d'au plus 200 nm.

**9.** Vitrage selon une quelconque des revendications précédentes, **caractérisé en ce que** l'empilage multicouches comprend au moins deux couches absorbant le rayonnement solaire.

**10.** Vitrage selon une quelconque des revendications précédentes, **caractérisé en ce que** l'empilage multicouches comprend au moins une couche métallique supplémentaire à base d'argent de telle sorte que la ou chaque couche à base d'argent soit entourée d'un revêtement diélectrique.

**11.** Vitrage selon la revendication 10, **caractérisé en ce qu'**au moins un des revêtements diélectriques comprend au moins deux couches diélectriques et la couche absorbant le rayonnement solaire est insérée entre ces deux couches diélectriques de ce revêtement diélectrique.

**12.** Vitrage selon la revendication 11, **caractérisé en ce que** les deux dites couches diélectriques enserrant la couche métallique absorbant le rayonnement solaire sont à base de nitrure de silicium ou de nitrure d'aluminium.

**13.** Vitrage selon la revendication 10, **caractérisé en ce que** la couche métallique supplémentaire à base d'argent est située dans l'empilement directement sur et/ou sous la couche métallique absorbant le rayonnement solaire.

**14.** Vitrage selon l'une quelconque des revendication 10 à 13, **caractérisé en ce que** la ou les couches métalliques supplémentaires à base d'argent a ou ont une épaisseur d'au moins 9 nm, préférentiellement d'au moins 13 nm, et d'au plus 23 nm, plus préférentiellement d'au moins 15 nm et d'au plus 22 nm.

**15.** Vitrage selon une quelconque des revendications 10 à 14, **caractérisé en ce que** la couche absorbant le rayonnement solaire a une épaisseur géométrique comprise entre 0,5 et 8 nm, de préférence, entre 0,5 et 5 nm.

**16.** Vitrage selon une quelconque des revendications précédentes, dont la variation colorimétrique en transmission, $\Delta E^*_{TLr}$ est inférieure à 8, préférentiellement est inférieure à 5, plus préférentiellement est inférieure à 3, lorsque ledit vitrage est soumis à une température d'au moins 630°C et d'au plus 670°C pendant 7 minutes.

**17.** Vitrage selon une quelconque des revendications précédentes dont la variation colorimétrique en réflexion côté face verre, $\Delta E^*_{Rg}$ est inférieure à 8, préférentiellement est inférieure à 5, plus préférentiellement est inférieure à 3, lorsque ledit vitrage est soumis à une température d'au moins 630°C et d'au plus 670°C pendant 7 minutes.

**18.** Vitrage selon une quelconque des revendications précédentes dans lequel l'épaisseur de la couche métallique absorbant le rayonnement solaire est choisie de façon à ce que la transmission lumineuse pour un substrat constitué de verre clair de 4 mm d'épaisseur soit au moins égale à 2% et au plus égale à 75%.

**19.** Vitrage selon une quelconque des revendications précédentes dans lequel l'épaisseur optique des revêtements diélectriques est choisie de manière à ce que la réflexion côté couche soit d'au moins 1% et d'au plus 55%.

**20.** Vitrage selon une quelconque des revendications précédentes, **caractérisé en ce que** la réflexion lumineuse mesurée du côté substrat est d'au moins 27%, de préférence d'au moins 30%, et avantageusement d'au moins 35%.

**21.** Vitrage selon une quelconque des revendications précédentes, **caractérisé en ce que** la réflexion lumineuse mesurée du côté substrat est au moins 2 fois, de préférence au moins 2,5 fois, et avantageusement au moins 3 fois supérieure à la réflexion lumineuse mesurée du côté du système de couches.

**22.** Vitrage selon la revendication 12, **caractérisé en ce que** l'empilage multicouches comprend la succession suivante : couche de nitrure de silicium ou de nitrure d'aluminium / couche absorbant le rayonnement solaire / couche de nitrure de silicium ou de nitrure d'aluminium / couche d'oxyde transparent intercalaire à base d'oxyde de Zn, Sn Ti ou Zr, ou leur mélange, différente de la couche de mouillage / couche de mouillage à base d'oxyde de zinc / couche métallique supplémentaire à base d'argent.

**23.** Vitrage selon la revendication 22, **caractérisé en ce que** la couche métallique absorbant le rayonnement solaire a une épaisseur géométrique comprise entre 0,5 et 8 nm.

**24.** Vitrage selon une quelconque des revendications 22 ou 23, **caractérisé en ce que** l'oxyde transparent intercalaire est un oxyde mixte zinc-étain ou un oxyde mixte titane-zirconium, de préférence un oxyde mixte zinc-étain ayant au moins 20% d'étain et 10% de zinc.

**25.** Utilisation d'un vitrage de contrôle solaire selon une quelconque des revendications précédentes comme élément vitré de véhicule automobile, comme élément de vitrage de bâtiments ou comme élément vitré d'un appareil électroménager tel qu'une porte de four de cuisson.

**Patentansprüche**

**1.** Sonnenschutzverglasung, umfassend auf mindestens einer der Seiten eines Glassubstrats eine mehrschichtige Stapelung, umfassend mindestens eine Schicht, die die Sonnenstrahlung absorbiert, und dielektrische Verkleidungen, die die die Sonnenstrahlung absorbierende Schicht umgeben, **dadurch gekennzeichnet, dass** die die Sonnenstrahlung absorbierende Schicht eine Schicht aus einer Metall-Legierung auf Basis von Zirkonium und Chrom ist, umfassend mindestens 25 Gew.-% Chrom und mindestens 20 Gew.-% Zirkonium, wobei die mehrschichtige Stapelung zwischen dem Substrat und der die Sonnenstrahlung absorbierenden Schicht sowie über der die Sonnenstrahlung absorbierenden Schicht mindestens eine Verkleidung aus einem dielektrischen Material auf Basis einer Verbindung umfasst, die ausgewählt ist unter Siliziumoxid, Aluminiumoxid, Siliziumnitrid, Aluminiumnitrid, den gemischten Aluminium-Silizium-Nitriden, Silzium-Oxinitrid und Aluminium-Oxinitrid.

**2.** Verglasung nach Anspruch 1, **dadurch gekennzeichnet, dass** die die Sonnenstrahlung absorbierende Schicht 25 bis 75 Gew.-% Zirkonium umfasst.

**3.** Verglasung nach Anspruch 2, **dadurch gekennzeichnet, dass** die die Sonnenstrahlung absorbierende Schicht 45 bis 65 Gew.-% Zirkonium umfasst.

**4.** Verglasung nach einem der vorhergehenden Ansprüche, **dadurch gekennzeichnet, dass** die die Sonnenstrahlung absorbierende Schicht eine geometrische Dicke zwischen 0,5 und 30 nm, vorzugsweise zwischen 2 und 25 nm, aufweist.

**5.** Verglasung nach Anspruch 4, **dadurch gekennzeichnet, dass** die die Sonnenstrahlung absorbierende Schicht eine geometrische Dicke zwischen 10 und 25 nm, vorzugsweise zwischen 12 und 22 nm, aufweist.

**6.** Verglasung nach Anspruch 4, **dadurch gekennzeichnet, dass** die die Sonnenstrahlung absorbierende Schicht eine geometrische Dicke zwischen 0,5 und 10 nm, vorzugsweise zwischen 2 und 5 nm, aufweist.

**7.** Verglasung nach einem der vorhergehenden Ansprüche, **dadurch gekennzeichnet, dass** die Schicht aus dielektrischem Material zwischen dem Substrat und der die Sonnenstrahlung absorbierenden Schicht eine optische Dicke von mindestens 10 nm und höchstens 200 nm, vorzugsweise von mindestens 20 nm und höchstens 180 nm, aufweist.

**8.** Verglasung nach einem der vorhergehenden Ansprüche, **dadurch gekennzeichnet, dass** die Schicht aus dielektrischem Material, die sich über der die Sonnenstrahlung absorbierenden Schicht befindet, eine optische Dicke von mindestens 15 nm und höchstens 200 nm aufweist.

**9.** Verglasung nach einem der vorhergehenden Ansprüche, **dadurch gekennzeichnet, dass** die mehrschichtige Stapelung mindestens zwei die Sonnenstrahlung absorbierende Schichten umfasst.

**10.** Verglasung nach einem der vorhergehenden Ansprüche, **dadurch gekennzeichnet, dass** die mehrschichtige Stapelung mindestens eine zusätzliche Metallschicht auf Basis von Silber umfasst, so dass die oder jede Schicht auf Basis von Silber von einer dielektrischen Verkleidung umgeben ist.

**11.** Verglasung nach Anspruch 10, **dadurch gekennzeichnet, dass** mindestens eine der dielektrischen Verkleidungen mindestens zwei dielektrische Schichten umfasst, und die die Sonnenstrahlung absorbierende Schicht zwischen diesen beiden dielektrischen Schichten dieser dielektrischen Verkleidung eingesetzt ist.

12. Verglasung nach Anspruch 11, **dadurch gekennzeichnet, dass** die beiden dielektrischen Schichten, die die die Sonnenstrahlung absorbierende Metallschicht einschließen, auf Basis von Siliziumnitrid oder Aluminiumnitrid sind.

13. Verglasung nach Anspruch 10, **dadurch gekennzeichnet, dass** die zusätzliche Metallschicht auf Basis von Silber in der Stapelung direkt auf und/oder unter der die Sonnenstrahlung absorbierenden Metallschicht angeordnet ist.

14. Verglasung nach einem der Ansprüche 10 bis 13, **dadurch gekennzeichnet, dass** die zusätzliche(n) metallische(n) Schicht(en) auf Basis von Silber eine Dicke von mindestens 9 nm, vorzugsweise von mindestens 13 nm, und von höchstens 23 nm, noch bevorzugter von mindestens 15 nm und von höchstens 22 nm, hat(haben).

15. Verglasung nach einem der Ansprüche 10 bis 14, **dadurch gekennzeichnet, dass** die die Sonnenstrahlung absorbierende Schicht eine geometrische Dicke zwischen 0,5 und 8 nm, vorzugsweise zwischen 0,5 und 5 nm, aufweist.

16. Verglasung nach einem der vorhergehenden Ansprüche, deren kolorimetrische Variation bei Übertragung $\Delta E^*_{TLr}$ geringer als 8, vorzugsweise geringer als 5 und noch bevorzugter geringer als 3 ist, wenn die Verglasung einer Temperatur von mindestens 630 °C und höchstens 670 °C 7 Minuten lang ausgesetzt ist.

17. Verglasung nach einem der vorhergehenden Ansprüche, deren kolorimetrische Variation bei Reflexion glasseitig $\Delta E^*_{Rg}$ geringer als 8, vorzugsweise geringer als 5 und noch bevorzugter geringer als 3 ist, wenn die Verglasung einer Temperatur von mindestens 630 °C und höchstens 670 °C 7 Minuten lang ausgesetzt ist.

18. Verglasung nach einem der vorhergehenden Ansprüche, bei der die Dicke der die Sonnenstrahlung absorbierenden Metallschicht derart gewählt ist, dass die Lichtübertragung für ein von Klarglas von 4 mm Dicke gebildetes Substrat mindestens gleich 2 % und höchstens gleich 75 % ist.

19. Verglasung nach einem der vorhergehenden Ansprüche, bei der die optische Dicke der dielektrischen Verkleidungen derart gewählt ist, dass die Reflexion schichtseitig mindestens 1 % und höchstens 55 % ist.

20. Verglasung nach einem der vorhergehenden Ansprüche, **dadurch gekennzeichnet, dass** die Lichtreflexion, substratseitig gemessen, mindestens 27 %, vorzugsweise mindestens 30 % und vorteilhafterweise mindestens 35 % ist.

21. Verglasung nach einem der vorhergehenden Ansprüche, **dadurch gekennzeichnet, dass** die Lichtreflexion, substratseitig gemessen, mindestens 2-mal, vorzugsweise mindestens 2,5-mal und vorteilhafterweise mindestens 3-mal größer als die auf der Seite des Schichtensystems gemessene Lichtreflexion ist.

22. Verglasung nach Anspruch 12, **dadurch gekennzeichnet, dass** die mehrschichtige Stapelung die folgende Aufeinanderfolge umfasst: Schicht von Siliziumnitrid oder Aluminiumnitrid / die Sonnenstrahlung absorbierende Schicht / Schicht von Siliziumnitrid oder Aluminiumnitrid / transparente Oxidzwischenschicht auf Basis eines Oxids von Zn, Sn, Ti oder Zr oder ihres Gemisches, im Unterschied zu der Benetzungsschicht / Benetzungsschicht auf Basis von Zinkoxid / zusätzliche Metallschicht auf Basis von Silber.

23. Verglasung nach Anspruch 22, **dadurch gekennzeichnet, dass** die die Sonnenstrahlung absorbierende Metallschicht eine geometrische Dicke zwischen 0,5 und 8 nm aufweist.

24. Verglasung nach einem der Ansprüche 22 oder 23, **dadurch gekennzeichnet, dass** das transparente Zwischenoxid ein gemischtes Zink-Zinn-Oxid oder ein gemischtes Titan-Zirkonium-Oxid, vorzugsweise ein gemischtes Zink-Zinn-Oxid mit mindestens 20 % Zinn und 10 % Zink, ist.

25. Verwendung einer Sonnenschutzverglasung nach einem der vorhergehenden Ansprüche als verglastes Element eines Kraftfahrzeugs, als Verglasungselement von Gebäuden oder als verglastes Element eines Haushaltsgeräts, wie einer Backofentür.

**Claims**

1. Solar-control glazing unit including on at least one of the faces of a glazing substrate a multilayer stack comprising at least one solar-radiation-absorbing layer and dielectric coatings flanking said solar-radiation-absorbing layer, **characterized in that** the solar-radiation-absorbing layer is a layer of a metal alloy based on zirconium and chromium, comprising at least 25% by weight chromium and at least 20% by weight zirconium, the multilayer stack comprising, between the substrate and the solar-radiation-absorbing layer, and above the solar-radiation-absorbing layer, at least one coating made of a dielectric material based on a compound selected from silicon oxide, aluminium oxide, silicon nitride, aluminium nitride, mixed aluminium-silicon nitrides, silicon oxynitride and aluminium oxynitride.

2. Glazing unit according to Claim 1, **characterized in that** the solar-radiation-absorbing layer comprises from 25 to 75% by weight zirconium.

3. Glazing unit according to Claim 2, **characterized in that** the solar-radiation-absorbing layer comprises from 45 to 65% by weight zirconium.

4. Glazing unit according to any one of the preceding claims, **characterized in that** the solar-radiation-absorbing layer has a geometric thickness comprised between 0.5 and 30 nm and preferably comprised between 2 and 25 nm.

5. Glazing unit according to Claim 4, **characterized in that** the solar-radiation-absorbing layer has a geometric thickness comprised between 10 and 25 nm and preferably comprised between 12 and 22 nm.

6. Glazing unit according to Claim 4, **characterized in that** the solar-radiation-absorbing layer has a geometric thickness comprised between 0.5 and 10 nm and preferably comprised between 2 and 5 nm.

7. Glazing unit according to any one of the preceding claims, **characterized in that** the layer made of dielectric material between the substrate and the solar-radiation-absorbing layer has an optical thickness of at least 10 nm and at most 200 nm and preferably of at least 20 nm and at most 180 nm.

8. Glazing unit according to any one of the preceding claims, **characterized in that** the layer made of dielectric material located above the solar-radiation-absorbing layer has an optical thickness of at least 15 nm and of at most 200 nm.

9. Glazing unit according to any one of the preceding claims, **characterized in that** the multilayer stack comprises at least two solar-radiation-absorbing layers.

10. Glazing unit according to any one of the preceding claims, **characterized in that** the multilayer stack comprises at least one additional silver-based metal layer such that the or each silver-based layer is surrounded by a dielectric coating.

11. Glazing unit according to Claim 10, **characterized in that** at least one of the dielectric coatings comprises at least two dielectric layers and the solar-radiation-absorbing layer is inserted between these two dielectric layers of this dielectric coating.

12. Glazing unit according to Claim 11, **characterized in that** said two dielectric layers enclosing the solar-radiation-absorbing metal layer are based on silicon nitride or aluminium nitride.

13. Glazing unit according to Claim 10, **characterized in that** the additional silver-based metal layer is located in the stack directly on and/or under the solar-radiation-absorbing metal layer.

14. Glazing unit according to any one of Claims 10 to 13, **characterized in that** the one or more additional silver-based metal layers have a thickness of at least 9 nm, preferably of at least 13 nm, and of at most 23 nm, and more preferably of at least 15 nm and at most 22 nm.

15. Glazing unit according to any one of Claims 10 to 14, **characterized in that** the solar-radiation-absorbing layer has a geometric thickness comprised between 0.5 and 8 nm and preferably between 0.5 and 5 nm.

16. Glazing unit according to any one of the preceding claims, wherein the colorimetric variation in transmission $\Delta E^*_{TLr}$ is less than 8, preferably less than 5 and more preferably less than 3 when said glazing unit is subjected to a temperature of at least 630°C and of at most 670°C for 7 minutes.

17. Glazing unit according to any one of the preceding claims, wherein the colorimetric variation in glass-side reflection $\Delta E^*_{Rg}$ is less than 8, preferably less than 5 and more preferably less than 3 when said glazing unit is subjected to a temperature of at least 630°C and of at most 670°C for 7 minutes

18. Glazing unit according to any one of the preceding claims, wherein the thickness of the solar-radiation-absorbing metal layer is chosen so that, with a substrate made of 4 mm-thick clear glass, the light transmittance is at least equal to 2% and at most equal to 75%.

19. Glazing unit according to any one of the preceding claims, wherein the optical thickness of the dielectric coatings is chosen so that the layer-side reflectance is at least 1% and at most 55%.

20. Glazing unit according to any one of the preceding claims, **characterized in that** the glass-side light measured reflectance is at least 27%, preferably at least 30% and advantageously at least 35%.

21. Glazing unit according to any one of the preceding claims, **characterized in that** the light reflectance measured on the substrate side is at least 2 times, preferably at least 2.5 times, and advantageously at least 3 times higher than the light reflectance measured on the layer-system side.

22. Glazing unit according to Claim 12, **characterized in that** the multilayer stack comprises the following succession: layer of silicon nitride or aluminium nitride / solar-radiation-absorbing layer / layer of silicon nitride or aluminium nitride / layer of intercalating transparent oxide based on oxides of Zn, Sn, Ti or Zr or a mixture thereof, said layer being different from the wetting layer / wetting layer based on zinc oxide / additional silver-based metal layer.

23. Glazing unit according to Claim 22, **characterized in that** the solar-radiation-absorbing metal layer has a geometric thickness comprised between 0.5 and 8 nm.

24. Glazing unit according to either one of Claims 22 and 23, **characterized in that** the intercalating transparent oxide is a mixed zinc-tin oxide or a mixed titanium-zirconium oxide and preferably a mixed zinc-tin oxide containing at least 20% tin and 10% zinc.

25. Use of a solar-control glazing unit according to any one of the preceding claims as a glazed element of a motor vehicle, as a glazing element of buildings or a glazed element of a household electrical appliance such as an oven door.

**EP 2 969 990 B1**

## RÉFÉRENCES CITÉES DANS LA DESCRIPTION

**Documents brevets cités dans la description**

- US 20120225316 A
- US 20120225304 A